# EUROPEAN PATENT SPECIFICATION

(11) **EP 1 558 726 B1**
(45) Date of publication and mention of the grant of the patent: **30.12.2009**
(21) Application number: 03796004.4
(22) Date of filing: 07.11.2003
(51) Int. Cl.: C12N 7/00, A61K 39/12, C07K 14/18, C12N 5/10

(54) **VACCINES AGAINST WEST NILE VIRUS**
IMPFSTOFF GEGEN WEST NILE VIRUS
VACCINS CONTRE LE VIRUS DU NIL OCCIDENTAL

(30) Priority: 08.11.2002 WO PCT/NL02/00718; 28.04.2003 WO PCT/EP03/50129
(43) Date of publication of application: 03.08.2005
(73) Proprietor: Crucell Holland B.V., 2333 CN Leiden (NL)
(72) Inventor: UYTDEHAAG, Alphonsus, Gerardus, Cornelis, Maria, NL-3452 EH Vleuten (NL); SCHOUTEN, Govert, Johan, NL-2353 EM Leiderdorp (NL); GOUDSMIT, Jaap, NL-1075 CX Amsterdam (NL)
(74) Representative: Hateboer, Guus
(86) International application number: PCT/EP2003/050806
(87) International publication number: WO 2004/042042

(56) References cited:
- EP-A- 1 103 610
- WO-A-02/072036
- SHI P-Y ET AL: "Infectious cDNA clone of the epidemic West Nile virus from New York City" JOURNAL OF VIROLOGY, THE AMERICAN SOCIETY FOR MICROBIOLOGY, US, vol. 76, no. 12, June 2002 (2002-06), pages 5847-5856, XP002252636 ISSN: 0022-538X
- YAMSHCHIKOV VLADIMIR F ET AL: "An infectious clone of the West Nile flavivirus" VIROLOGY, vol. 281, no. 2, 15 March 2001 (2001-03-15), pages 294-304, XP002276738 ISSN: 0042-6822 cited in the application
- MALKINSON M ET AL: "Use of live and inactivated vaccines in the control of West Nile fever in domestic geese" ANNALS OF THE NEW YORK ACADEMY OF SCIENCES. WEST NILE VIRUS:, 2001, pages 255-261, XP008029576 International Conference on the West Nile Virus;White Plains, New York, USA; April 05-07, 2001, 2001 New York Academy of Sciences {a}, 2 East 63rd Street, New York, NY, 10021, USA Series: Annals of the New York Academy of Sciences (ISSN 0077-8923) cited in the application
- SHEN JIE ET AL: "Early induction of interferon-independent virus-specific ICAM-1 (CD54) expression by flavivirus in quiescent but not proliferating fibroblasts: Implications for virus-host interactions" VIROLOGY, vol. 208, no. 2, 1995, pages 437-449, XP002276739 ISSN: 0042-6822
- BAO SHISAN ET AL: "Flavivirus induces MHC antigen on human myoblasts: A model of autoimmune myositis?" MUSCLE AND NERVE, vol. 15, no. 11, 1992, pages 1271-1277, XP008029696 ISSN: 0148-639X
- GALLIMORE P H ET AL: "TRANSFORMATION OF HUMAN EMBRYO RETINOBLASTS WITH SIMIAN VIRUS 40, ADENOVIRUS AND RAS ONCOGENES" ANTICANCER RESEARCH, HELENIC ANTICANCER INSTITUTE, ATHENS,, GR, vol. 6, no. 3, May 1986 (1986-05), pages 499-508, XP008020458 ISSN: 0250-7005
- JIA X-Y X-Y ET AL: "Genetic analysis of West Nile New York 1999 encephalitis virus" LANCET, XX, XX, vol. 354, no. 9194, 4 December 1999 (1999-12-04), pages 1971-1972, XP004262933 ISSN: 0140-6736
- BAE CHEON-SOON ET AL: "PRODUCTION OF HANTAAN VIRUS FROM HUMAM IMMORTALIZED RETINA CELL AND ITS IMMUNOGENICITY" JOURNAL OF MICROBIOLOGY AND BIOTECHNOLOGY, KOREAN SOCIETY FOR APPLIED MICROBIOLOGY, SEOUL, KO, vol. 12, no. 6, 20 December 2002 (2002-12-20), pages 882-889, XP008021148 ISSN: 1017-7825
- DUNSTER LM ET AL.: "Attenuation of virulence of flaviviruses following passage in HeLa cells" J. GEN. VIROL., vol. 71, 1990, pages 601-607,

## Description

### FIELD OF THE INVENTION

The invention relates to the field of medicine. It particularly relates to vaccines against

West Nile Virus, and to methods of producing same.

### BACKGROUND OF THE INVENTION

The Flaviviridae family contains three genera: the flaviviruses, the pestiviruses and the Hepatitis C viruses. Flaviviruses are small spherical enveloped viruses with virions composed of three structural proteins designated C, M and E, and a single (+)RNA genome of approximately 11,000 nucleotides (Chambers et al. 1990; Brinton 2002). The flavivirus genus comprises more than 60 highly related viruses including several human pathogens of global and local epidemiological importance, with most of them being transmitted by arthropod vectors. With a combined toll of hundreds of millions of infections around the world annually, yellow fever virus, Japanese encephalitis virus, St. Louis encephalitis virus, Murray Valley encephalitis virus, tick-borne encephalitis virus, dengue virus, and West Nile Virus continue to be in the focus of epidemiological surveillance worldwide. While the availability of an efficient vaccine and control of mosquito vectors have resulted in significant improvement of the epidemiological situation in yellow fever, other existing as well as emerging flavivirus-associated diseases, for which vaccines are not yet available, continue to challenge experimental virology. West Nile Virus was first identified in 1937 in the West Nile district in Uganda (Smithburn et al. 1940) and has now been recognized as the most widespread of the flaviviruses, with a geographic distribution in Africa, Asia, Europe, Australia and North America (Campbell et al. 2002). Recent outbreaks have been reported in Russia, Israel, Romania, and the United States (Hubalek and Halouzka 1999; Anderson et al. 1999; Jia et al. 1999; Lanciotti et al. 1999), with over 3000 individuals tested positive and nearly 300 people killed. The virus was found to have caused infections in persons in over 40 different states in the US. Symptoms vary from fever, headache, skin rash, swollen lymph glands, neck stiffness, stupor, disorientation, tremors, convulsions, muscle weakness, pancreatitis, myocarditis, paralysis to coma, while in 15% of the cases the disease progresses to a more severe state (e.g., West Nile encephalitis), which can lead to death. Besides infecting humans, West Nile Viruses are also known to infect horses and several bird species and cause severe illness and death. The outbreak in New York in 1999 started with massive death among crows and several lethal cases in horses.

Several approaches were followed in the art to counteract the infection and resulting illnesses brought about by flaviviruses. One proposed approach was to treat individuals with chemical compounds, such as ribavirin and nucleoside analogues, and biologicals such as interferon alpha-2b and/or helioxanthin (WO 00/10991; WO 02/15664; US patent no. 6,306,899). Others have focused on the development of vaccines containing: chimeric flaviviruses, (manipulated) yellow fever viruses for cross-vaccination, sub-viral particles, replication defective flaviviruses, (naked) nucleic acid, recombinant sub-units (envelope proteins), or poxviruses containing flavivirus antigens (Arroyo et al. 2001; Wang et al. 2001;.Chang et al. 2001; WO 00/12128; WO 01/03729; WO 02/72036; WO 99/26653; WO 99/63095; WO 01/60315; WO 02/68637; EP 0869184 A; WO 00/14245; WO 02/74963 EP 0691404 A WO 98/37911; WO 01/39802; WO 01/60847; EP 0102228 A; EP 0872553 A; US patent no. 6,184,024, 5,514,375, 5,744,140, 5,744,141 6,416,763, 6,432,411, 5,494671, 6,258,788). One veterinary vaccine containing inactivated West Nile Viruses was approved in August 2001, solely for the use in horses. In Israel, an approach was taken to produce a West Nile Virus strain isolated from geese (Goose Israel 1998) in mouse brains, to inactivate it by formaldehyde and to apply the vaccine in geese flocks (Malkinson et al. 2001). This veterinary vaccine (for use in geese flocks) was approved by the Israelian authorities in July/August 2001. Numerous disadvantages exist with the treatments and vaccines mentioned above, related to dosages, (in-) effectiveness, required titers in production, and side effects (Monath et al. 2001). Disadvantages in the production of vaccines on systems such as mouse brains are clearly related to safety, animal welfare, adverse side effects, allergic properties, titers and scalability. No human vaccines have been produced to date. To elicit a proper immune response against the wild type virus it would be clearly desirable to have a vaccine comprising a virus that contains most if not all of its antigenic proteinaceous molecules in its wild type configuration, but that does not replicate and that is able to elicit a significant immune response, resulting in a proper protection against subsequent infections. Such vaccines should preferably contain whole-inactivated viruses. However, safe and large-scale production methods to obtain such whole-inactivated viruses are not available in the art for vaccines directed against West Nile Virus. A cell-based system based on the use of animal cells such as Vero cells has disadvantages since Vero cells are normally grown on microcarriers and therefore highly suited for large scale production, and the culture is by definition not free from animal-derived components. It is an object of the present invention to provide novel methods for producing West Nile Virus, preferably on large scale, for the production of novel vaccines based on West Nile Virus particles.

### BRIEF DESCRIPTION OF THE DRAWINGS

Figure 1 shows the Reverse Transcriptase PCR (RT-PCR) products using samples of cells as deposited under ECACC no. 96022940 infected with West Nile Virus.
Figure 2 shows the immune fluorescent staining of cells as deposited under ECACC no. 96022940 infected with West Nile Virus using a human serum as a negative control and a serum derived from a monkey that was infected with yellow fever virus.

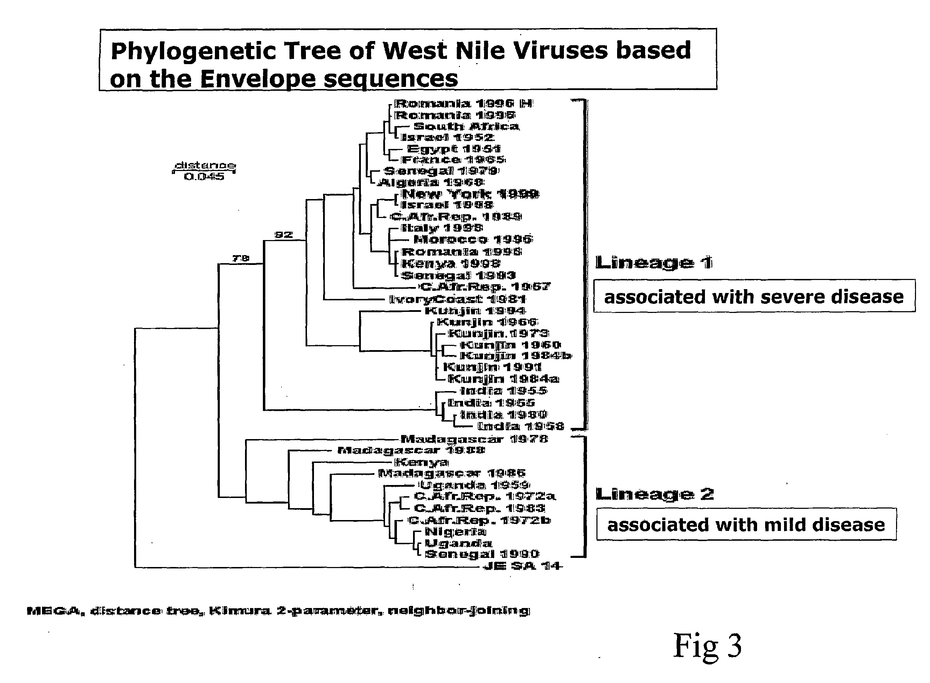

Figure 3 is a phylogenetic tree of a large set of West Nile Viruses based on sequences of the envelope protein. In the upper part, the lineage I strains are given (generally associated with severe disease) and in the lower part, the lineage II strains are given (generally associated with mild disease).
Figure 4 is a diagram showing the titer of the virus preparation produced on cells as deposited under ECACC no. 96022940 and in Mouse Brain. The titration was determined using VERO cells and given in CCID50/ml.
Figure 5 is a diagram showing the titer of the virus preparation produced on cells as deposited under ECACC no. 96022940 and in Mouse Brain. The titration was determined using suckling mice and given in MLD50/0.1 ml.

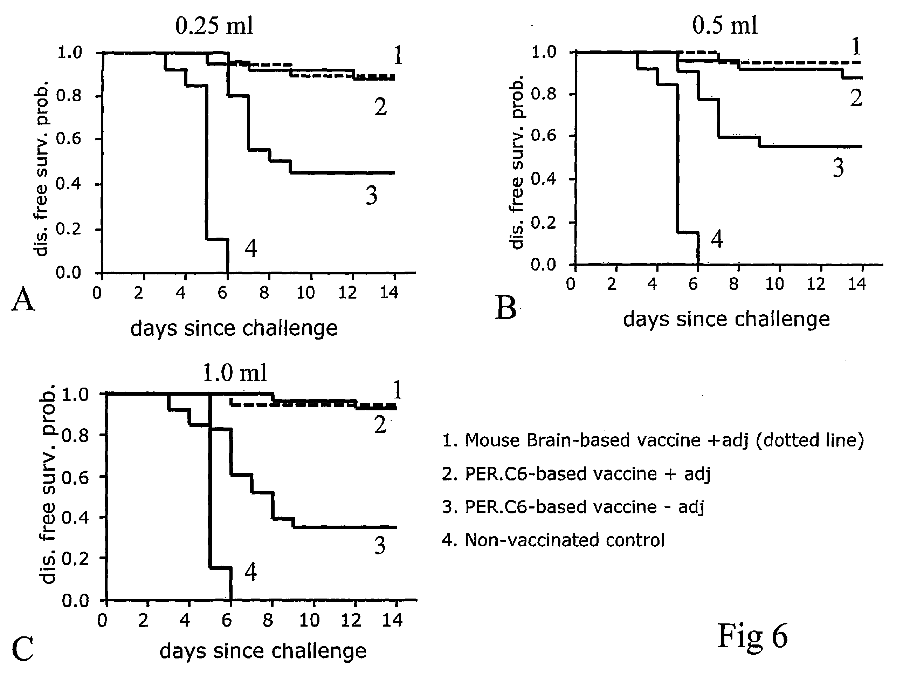

Figure 6 are diagrams showing the time to disease or death of the geese challenged with the West Nile Virus strain Goose Israel 1998, vaccinated with a volume of 0.25 ml (A), 0.5 ml (B) or 1.0 ml (C) as compared to the control geese that did not receive vaccination (negative control); given here as line '4'. The vaccine comprising the inactivated West Nile Virus produced on mouse brain was taken as a positive control and given as a dotted line '1'. The PER.C6-based vaccine including the adjuvant is represented by line '2', and the PER.C6-based vaccine without adjuvant is represented by line '3'.
Figure 7 is a diagram showing the time to disease or death of all geese combined from the three volumes of figure 6. Line '1' (dotted) represents the vaccine with the inactivated West Nile Virus produced on mouse brain. Line '2' represents the PER.C6-based vaccine including the adjuvant and '3' is the negative control. The group receiving the PER.C6-based vaccine without adjuvant is not given here.
Figure 8 shows the TCID50 titers obtained with several West Nile Virus strains grown on cells as deposited under ECACC no. 96022940, using different dilutions of virus: (A) New York 1999 (USA99b); (B) Kunjin 1991 (Aus91); (C) Madagascar 1978 (Mad78); (D) Kunjin 1960 (Aus60); (E) Cyprus 1968 (Cyp68); (F) Goose Israel 1998 (Isr98).
Figure 9 is a graphical representation of part of the data shown in Table XVII for the Mouse Brain-MO and PER-C6-WN-MO vaccines. Animals that died before challenge (2 in both groups, leaving 58 animals in both groups for challenge) were not included in this figure.
Figure 10 is a graphical representation of part of the data shown in Table XVII for the different PER.C6 based vaccines with or without aluminium-based adjuvants. Animals that died in these groups before challenge (1 for PER.C6-WN-AlOH leaving 59 animals; 4 in PER.C 6-WN-AlPh, leaving 56 animals; 3 in PER.C6-WN, leaving 57 animals) were not included in this figure.

### SUMMARY OF THE INVENTION

The present invention relates to methods for producing a West Nile Virus (WNV) and to cells comprising a nucleic acid coding for WNV, as defined in the claims.

### DETAILED DESCRIPTION

It is an object of the present invention to overcome at least some of the problems outlined above. The present description discloses new vaccines against West Nile Virus and methods of producing same. It is appreciated in the art that there is a great need for a potent vaccine against West Nile Virus that should be sufficiently protective and that could be produced to a large scale. The invention relates to the production of a whole-inactivated (or killed) virus, based on West Nile Virus. More specifically, it describes a whole-inactivated West Nile Virus that is being produced using cells that grow in suspension and under serum-free conditions (animal component free) to enable one to produce large-scale batches. It further relates to the down-stream processes for inactivating and purifying the produced viruses and to the compositions for prophylactic and therapeutic treatment.

In the art, West Nile Viruses have been grown and passaged on a limited number of cells: Baby Hamster Kidney (BHK) cells, fibroblasts, monkey kidney cells (Vero), murine macrophages, C6/36 cells, and HeLa cells (Dunster et al. 1990; Kurane et al. 1992; Wengler et al. 1990). Moreover, West Nile Virus has also been produced on infant mouse brains. None of these systems is highly suitable for producing West Nile Viruses in a combination of large-scale production, in suspension and under animal component-free and/or serum-free conditions. Especially these procedures are not suited for the production of vaccines that are to be used in humans. Vero cells grow on micro carriers, not in suspension, while HeLa cells are aggressive tumour cells and BHK is generally not found to be safe for the production of therapeutics. The other systems do not provide a platform for large production scale since cells need to grow indefinitely and should not be derived from a tumour. Also, vaccines produced on mouse brains are not desired due to safety, animal welfare, possible adverse side effects, allergic reactions and scalability. Importantly, an embryonic human retinoblast cell line obtained by transformation and immortalisation through the early region-1 (E1) from Adenovirus serotype 5 (cells as deposited under ECACC no. 96022940), a cell-based platform technology marketed by Crucell Holland B.V. under the trade name PER.C6™, has been described to support the growth of influenza virus, measles virus and Herpes simplex virus type 1 and 2 (WO 01/38362) . Although the use of cells as deposited under ECACC no. 96022940 for the production of flaviviruses has been suggested in WO 01/38362, no specific mention is made about West Nile Virus. The present invention discloses that E1-transformed human cells as deposited under ECACC no. 96022940 are able to sustain the growth of West Nile Virus, thereby providing a highly useful tool in the production of large batches of West Nile Virus that are to be used for subsequent purification and inactivation, and for use in vaccines.

The present invention relates to methods for producing a West Nile Virus comprising the steps of infecting a cell, or a culture of cells, with a West Nile Virus; and culturing the cell, or the culture of cells, obtained in the previous step in a suitable medium under conditions that cause said virus to replicate in the cell, or the culture of cells, thereby causing the West Nile Virus to be produced, wherein the cell, or the culture of cells, is characterized in that it is a cell or a culture of cells, as deposited under ECACC no. 96022940. In another embodiment of the invention, the invention relates to a method for producing a West Nile Virus comprising the steps of: providing a cell, or a culture of cells, with nucleic acid coding for said West Nile Virus; and culturing the cell, or the culture of cells, obtained in the previous step in a suitable medium under conditions that cause expression of said nucleic acid coding for said West Nile Virus, thereby causing the West Nile Virus to be produced, wherein the cell, or the culture of cells, is characterized in that it is a cell, or a culture of cells, as deposited under ECACC no. 96022940.

The nucleic acid that is administered to the cells in the methods of the present invention is preferably RNA, while said RNA is preferably delivered to the cell, or to the culture of cells, by means of a West Nile Virus.

The West Nile Virus to be produced is preferably lineage II strain West Nile B956, lineage II strain Madagascar 1978, lineage II strain Cyprus 1968, lineage I strain Kunjin 1960, lineage I strain Kunjin 1991, lineage I strain Goose Israel 1998 or lineage I strain New York 1999. In another preferred embodiment said West Nile Virus strain to be produced is a lineage II strain selected from the group consisting of: Kenya, Uganda, Senegal 1990, Uganda 1937, Uganda 1959, Central African Republic 1972a, Central African Republic 1972b, Central African Republic 1983, Madagascar 1986 and Madagascar 1988. Such West Nile Virus strains may therefore also be used to deliver the nucleic acid to said cells, or said culture of cells.

In another aspect of the invention, the invention relates to methods according to the invention, wherein said West Nile Virus is providing the nucleic acid to the cells in a multiplicity of infection ranging from 5 to 5x10⁻⁷ plaque-forming units per cell. This range is sufficient to obtain high titers of replicating West Nile Viruses being produced, as can be seen in the examples herein.

The invention also relates to methods according to the invention, further comprising the steps of optionally harvesting the produced West Nile Virus; and inactivating the produced West Nile Virus; or to methods according to the invention, further comprising the steps of, in either order, inactivating the produced West Nile Virus; and harvesting the produced West Nile Virus.

Inactivation of the produced West Nile Viruses is achieved through methods known to persons skilled in the art. Examples of inactivation are the use of UV-light, or the use of beta-propiolactone. A preferred inactivation takes place through the use of formaldehyde (formalin-induced inactivation).

In yet another embodiment, the invention provides methods for obtaining West Nile Viruses that can be used in sub-unit vaccines; therefore the invention also relates to a method according to the invention wherein the West Nile Viruses are produced, further comprising the steps of disrupting the produced West Nile Virus; and purifying one or more antigenic components of said West Nile Virus, disrupted in the previous step. Such antigenic components are generally the capsid (or envelope) proteins of the West Nile Virus particle, although it cannot be excluded that other (antigenic) proteins, peptides, or entities from the virus can obtained after using the methods of the present invention.

To obtain cross-protection, which is a mechanism through which a vaccine based on a relatively harmless virus is used to raise protection against a virus that would normally give rise to a relatively harmful disease, it is preferred to use a vaccine comprising a whole-inactivated lineage II West Nile Virus, a pharmaceutically acceptable carrier and optionally, an adjuvant.

The invention furthermore relates to a human cell having a nucleic acid coding for a West Nile Virus, wherein said human cell is a cell as deposited under ECACC no. 96022940.

The present invention relates to a method for producing a West Nile Virus for use as a vaccine, comprising: a) providing a cell as deposited under ECACC no. 96022940 , with a nucleic acid encoding said West Nile Virus ; b) culturing the cell obtained in the previous step in a suitable medium; and c) allowing for expression of said West Nile Virus in said medium and/or said cell. Preferably, said method also comprises the step of purifying the produced West Nile Virus or proteins derived thereof from the tissue culture supernatant and/or the cells. Purification steps that can or may be used for obtaining a purified West Nile Virus according to the present invention include (sterile) filtration, chromatography (e.g., using heparin sulphate), diafiltration and/or (an)ion exchange chromatography. Also preferred are methods of the invention, comprising the step of inactivating the obtained West Nile Virus. Inactivation is performed by using one or more of the inactivation methods available, such as polysorbate inactivation by for instance using Tween 20, Tween 40, Tween 60 and/or Tween 80, and/or by long wavelength ultraviolet radiation, and/or by furocoumarin, and/or by ascorbic acid and/or a salt thereof. Preferably, the West Nile Virus obtained by a method according to the invention is (whole-) inactivated by formalin and/or by beta-propiolactone treatment. The viral RNA may be inactivated by nucleic acid disrupting agents such as RNase.

The invention also relates to methods for the production of West Nile viral proteins. The West Nile viral proteins can be obtained by methods comprising a step of disrupting a West Nile Virus obtained by a method of the present invention, resulting in a subunit of the West Nile Virus. Such a subunit, generally comprising at least one antigenic component of the West Nile Virus, such as the envelope protein(s) and/or fragments thereof can then be used to produce a vaccine composition. The subunit of the West Nile Virus can also be obtained by methods as described , wherein a nucleic acid encoding said subunit is provided to a cell as deposited under ECACC no. 96022940. Therefore, said nucleic acid can be RNA, cDNA and DNA. The nucleic acid delivery vehicle is a West Nile Virus, and preferably, said nucleic acid is RNA.

In another preferred embodiment, said cells used for the production of West Nile Virus are cultured in suspension and/or in serum-free conditions. More preferably, said cells are cultured in mammalian-component free medium. Therefore, the invention also relates to methods for producing a West Nile Virus for use as a vaccine, comprising: a) providing a cell with a nucleic acid encoding said West Nile Virus ; b) culturing the cell obtained in the previous step in a suitable medium; and c) allowing for expression of said West Nile Virus in said medium and/or said cell, wherein said cell is cultured in suspension (non-adherent). Preferably, a suitable medium for the methods of the present invention is a medium lacking mammalian-derived components or a serum-free medium, and optionally factors that are recombinantly produced. The growing and culturing of the cells for the methods of the present invention may be performed by using different large-scale set-ups, such as fed-batch, perfusion culture and wave bags.

Providing the nucleic acid may occur during different stages in the cell-culture process, and by several different methods such as transfection, electroporation, infection through viral-based delivery (by carriers such as adenoviruses, alphaviruses and poxviruses) or by complexes such as liposomes, or other nucleic-acid delivery vehicles known in the art. Purifying the produced West Nile Viruses according to the methods of the present invention may be performed by several methods known in the art, such as single- or multistep (anion and/or cation) exchange chromatography.

In another aspect of the invention, the invention provides methods for producing West Nile Viruses according to the invention, wherein the nucleic acid that is provided to the cell is RNA. Said nucleic acid is provided by a West Nile Virus, which contains (in its wild type form) a single (+)RNA strand.

Many strains of West Nile Viruses have been described in the art (Lanciotti et al. 2002). In one embodiment of the present invention, the West Nile Virus that provides the nucleic acid to the cell and/or that is the West Nile to be produced is strain West Nile B956 (lineage II). Lineage II West Nile strains are normally not related to human illnesses, while lineage I strains are or can be (Lanciotti et al. 2002). The strains that may be produced with methods according to the invention are given in Table I. More West Nile Virus strains, not given in Table I, may also be produced with the methods of the present invention. Preferably, New York 1999 (also referred to as NY99 or USA99b, see below; several isolates were reported from the New York area, ranging from human, equine and avian sources), Israel 1998 (Goose Israel 1998, sometimes referred to as Isr98 or IS-98-ST1, see WO 02/081511), NY2000 3282, NY2000 3356, NY 1999 equine, Conn 1999, MD 2000, NJ 2000, Kunjin 1960 or 1991 (Aus60 or Aus91 respectively, also referred to as strains MRM 16 or K 6453 respectively, see below), Madagascar 1978, Cyprus 1968 and Israel 1999 H are used for the methods of the present invention. In one preferred embodiment, West Nile Virus strain NY 1999 hum (a strain isolated form a human brain in 1999 in the New York area) or 385-99 (a strain isolated from the organs of a Snowy Owl, *Nyctea scandiaca,* of The Bronx Zoo in the New York outbreak) are produced using methods of the present invention. It is to be understood that it is also feasible to grow chimeric flaviviruses known in the art (WO 98/37911; WO 01/39802; WO 01/60847; EP 0102228 A; EP 0872553 A; US patent no. 6,184,024) by methods of the present invention, thereby circumventing possible problems of low titers, high costs and/or safety issues.

In a specific embodiment, the present invention provides methods according to the invention, wherein a West Nile Virus is providing the nucleic acid to the cells in a multiplicity of infection ranging from 5 to 5x10⁻⁷ plaque forming units per cell. As shown in the examples, the inventors of the present invention were able to show that it is feasible to obtain titers of 10⁹ pfu/ml after three days following an multiplicity of infection that were as low as 0.005 pfu/cell, using methods of the present invention, while titers obtained with higher moi's were most likely even higher.

Also described is the use of a human cell, which cell does not produce structural adenoviral proteins, for the production of a West Nile Virus or at least one West Nile viral protein,
wherein said human cell is a cell as deposited under ECACC no. 96022940. A vaccine is preferably a composition comprising a West Nile Virus and/or a West Nile viral protein obtained, and a suitable (pharmaceutically acceptable) carrier such as regularly used in the art of preparing vaccine compositions for use in humans and in veterinary applications. Optionally, said vaccine also comprises an adjuvant. Preferably the human vaccine comprises an adjuvant reagent that is acceptable for use in humans, such as 'Alum' or aluminium hydroxide, which is an adjuvant known to persons skilled in the art. Another adjuvant that may be applied is aluminium phosphate. For veterinary use, it is also preferred to use an adjuvant, for example Mineral Oil. Mineral Oil is an adjuvant that is widely applied in the veterinary vaccine industry, for instance in the West Nile Virus vaccine produced on mouse brains that has been approved in Israel for vaccination of geese. The vaccine is applied for prophylactic, therapeutic and/or diagnostic use. The vaccine is also applied for cross-vaccination for viruses that are highly similar to West Nile Virus, within the Flaviviridae family. For safety reasons, it is preferable to vaccinate animals and human subjects against West Nile Virus by using a vaccine comprising a whole-inactivated Lineage II strain (associated with mild disease), thereby protecting such individuals against a lineage I strain infection (associated with severe disease) via a mechanism known as cross-protection. It is thus a highly preferred embodiment of the present invention to produce a vaccine based on a Lineage II strain that gives (cross-) protection against a Lineage I West Nile Virus in animals as well as in humans. The B956 strain (Lineage II) is just one example of such a strain, but those of skill in the art would be able to identify other strains related to mild disease causing strains and belonging to the Lineage II strains (for instance those given in Table I), that provide cross-protection against severe-disease causing strains upon vaccination with a vaccine comprising the mild-disease causing strain. Other preferred lineage II strains are Madagascar 1978 and Cyprus 1968.

### EXAMPLES

### Example 1. Infection of cells with strain West Nile B956.

Cells (as deposited under no. 96022940 at the European Collection of Animal Cell Cultures at the Centre for Applied Microbiology and Research) and useful in technologies as marketed as a platform by Crucell Holland B.V. under the trade name PER.C6™, were banked and cultured as described (WO 01/38362). A series of cells were cultured in T80 culture flasks with 10⁷ cells per flask, and several dilutions of West Nile Virus were incubated with these cells. The strain that was used was West Nile B956 (lineage II) (Yamshchikov et al. 2001). The virus was plaque purified on Vero cells using techniques known to persons skilled in the art of growing viruses and the virus was further produced on BHK cells. A plaque assay was performed on Vero cells to determine the viral titer of the starting material in the BHK supernatant. This plaque assay was performed according to the general methods applied in the art. This titer appeared to be 5x10⁸ plaque forming units per millilitre (pfu/ml). A mock-transfection was performed using dilution buffer (DMEM/5% FBS non-Heat Inactivated [nHI]). Post-infection, samples were taken each day for 'real time' reverse transcriptase TaqMan PCR analysis (Lanciotti et al. 2000) to determine the titer of the virus produced, for Reverse Transcriptase (RT) PCR and Immune Fluorescence. RT-PCR and TaqMan PCR was performed using West Nile Virus specific primers (see below).

The input virus was diluted in DMEM/5% FBS nHI and incubated for 1 h with the PER.C6™ cells in 8 serial dilutions (10⁻¹ to 10⁻⁸, with a multiplicity of infection (moi) of 5 to 5x10⁻⁷ pfu/cell). After incubation of the virus with the cells, the culture medium was discarded and replaced with fresh DMEM/5% FBS nHI (not-Heat Inactivated). Cells were cultured at 37°C/10% CO₂ at all times. Cytopathological effect (CPE) was scored visually after 24 h, 48 h and 72 h post-infection. Results are shown in Table II. No CPE was detected at 24 h post-infection. However, clear CPE was visible at the highest moi's after 48 h, while in most cases significant CPE was detected at 72 h post-infection. These results show clearly that E1-transformed human cells, such as PER.C6™ cells are able to sustain the production of West Nile Viruses.

### Example 2. RT-PCR on adenovirus E1-transformed human embryonic retina cells infected with West Nile Virus.

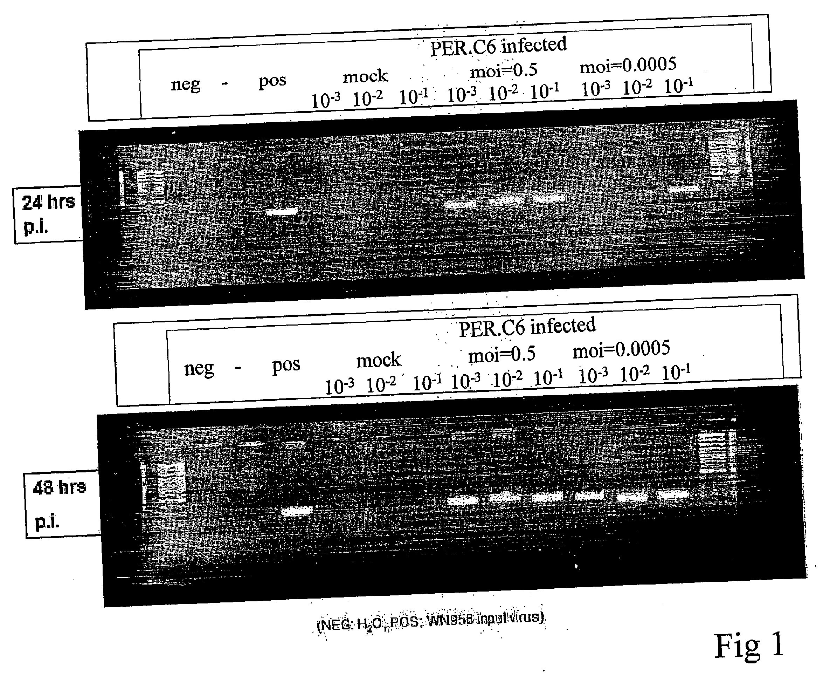

Reverse Transcriptase Polymerase Chain Reaction (RT-PCR) was performed on the mock-transfected cells as deposited under ECACC no. 96022940, and on the 24 h and 48 h post-infection samples of such cells infected with moi's of 5x10⁻¹ and 5x10⁻⁴ pfu/cell. RNA samples were diluted 1:10, 1:100 and 1:1000. RT-PCR was performed by using the Qiagen One-Step RT-PCR Kit (Qiagen) and general methods known to persons skilled in the art of molecular biology. The primers used were forward primer WNV 1: 5'-CCA CCG GA(A/T) GTT GAG TAG ACG-3' (SEQ ID NO:1) and reverse primer WNV 2: 5'-TTT G(T/G)T CAC CCA GTC CTC CT-3' (SEQ ID NO:2). The negative control contained solely water, while the positive control contained input virus from the BHK supernatant. The PCR program that was used was as follows: 30 min 50°C, 15 min 95°C, followed by 35 cycles of 30 sec 94°C, 30 sec 50°C and 1 min 72°C and a final step of once 10 min 72°C. Obtained amplified nucleic acid was loaded on a gel and visualised. Results show that West Nile viral RNA is present in all samples of cells that were infected with West Nile Virus, while no positive signal could be detected in the mock-infections (Figure 1). The amount increases from 24 h to 48 h post-infection in the lower moi sample.

### Example 3. Immune Fluorescence staining of cells as deposited under ECACC no. 96022940 infected with West Nile Virus.

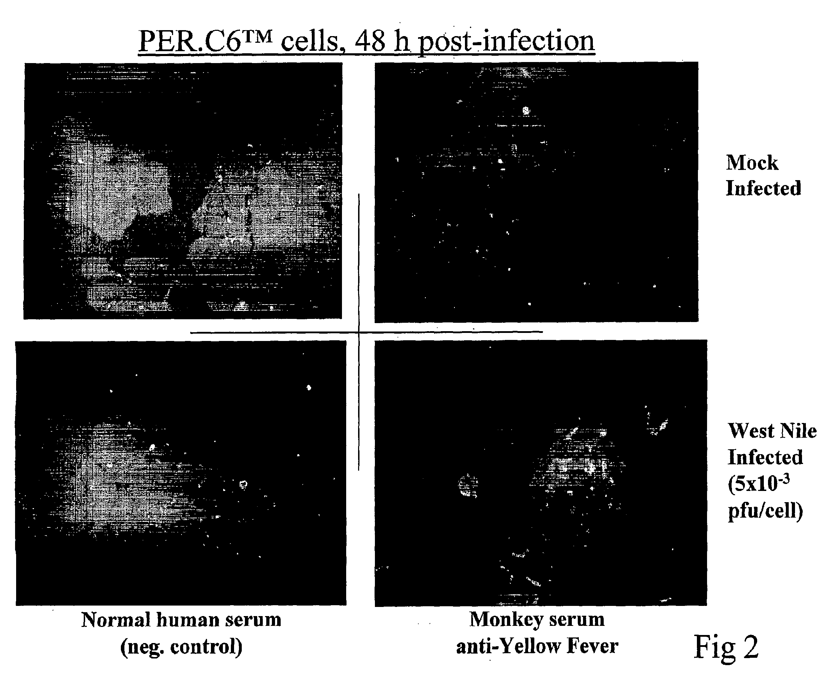

Samples were obtained 48 h post-infection from the cells as deposited under ECACC no. 96022940 that were mock-infected and that were infected with an moi of 5x10⁻³ (see Table II) with West Nile Virus B956. These samples were used for immune fluorescence using, as a negative control, normal human serum and, as a positive antiserum, a Monkey derived antiserum directed against the envelope of another flavivirus, namely Yellow Fever virus. Yellow Fever virus is highly similar to West Nile Virus, and the antiserum generally recognizes also the envelope of the West Nile Virus. The serum was obtained after injection of Yellow Virus in a monkey and recovering of the serum. Fixating with aceton and staining procedures were performed according to general methods known in the art, and by using a standard fluorescence microscope. Although the human serum gave a relatively high background, a positive signal could be determined on the cells stained with the monkey antiserum as can be seen in figure 2. These results indicate that West Nile Virus is able to infect human adenovirus E1-transformed cells, such as PER.C6™ cells.

### Example 4. Real-time TaqMan PCR for the detection and quantification of West Nile Virus RNA in infected PER.C6™ cells.

To determine the titers of the West Nile Virus that were produced by the cells as deposited under ECACC no. 96022940, a real-time reverse transcriptase TaqMan PCR was performed using on all samples, except for the 72 h post-infection samples of the three highest moi's as shown in Table II.

RNA was extracted using the spin protocol of the QIAamp Viral RNA Mini Kit (Qiagen) following the description provided by the manufacturer. 200 Il cell culture supernatant was mixed with 60 µl elution volume. Amplification and real-time detection was performed using the MasterMix™ without UNG with the RNase Inhibitor Mix (Applied Biosystems) and the QuantiTect Probe RT-PCR Kit (Qiagen) using the forward primer WNV 1 and reverse primer WNV 2, and with the VIC labelled probe: 5'-VIC-TGC TGC CTG CG(A/G) CTC AAC CC-TAMRA-3' (SEQ ID NO:3). All protocols were performed using the instructions provided by the manufacturers and generally following the methods as described by Hadfield et al. (2001) and Lanciotti et al. (2000). Concentrations used were: Forward primer 300 nM, Reverse primer 900 nM and VIC-labelled probe 100 nM.

Results are shown in Table III. Clearly, PER.C6 cells are able to sustain growth of at least a titer of 1x10⁹ pfu/ml using an input moi of 5x10⁻³ pfu/cell, 72 h post-infection, while probably even higher titers were obtained in lower dilutions. This indicates that PER.C6™ is a very useful tool for the production of West Nile Viruses. Since it has been shown that PER.C6™ cells can grow to very high densities, in serum-free medium in suspension, and in large incubators (>1000 litre), it is now possible to obtain very large batches of West Nile Virus that can be used for inactivation and subsequent use in vaccines against West Nile viral infections, and most likely also against other flavivirus infections due to cross-vaccination. The obtained West Nile Viruses can also be used to disrupt and thus to make split-vaccines or to purify separate subunits from the disrupted virus, such as the envelope protein(s) for the use in so-called sub-unit vaccines. Methods for disrupting enveloped viruses are known to the skilled person.

### Example 5. Production of West Nile Virus strain Goose Israel 1998 on human adenovirus E1-transformed cells for an animal-challenge model in geese.

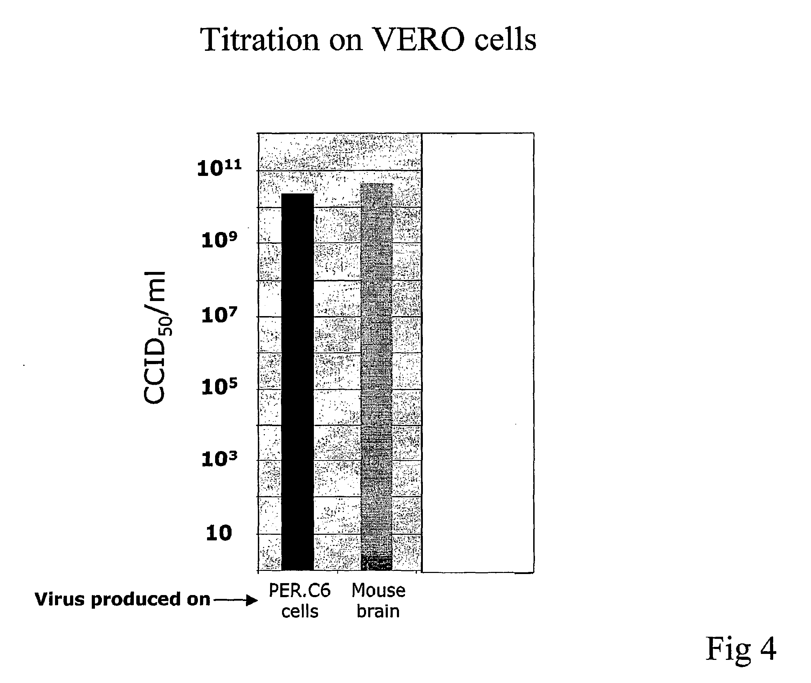

Cells as deposited under ECACC no. 96022940 were banked and cultured as described (WO 01/38362). West Nile Virus strain Goose Israel 1998 (Malkinson et al. 1998 and 2001; Lanciotti et al. 1999), was produced by inoculating sub-confluent (80%) monolayers of such cells, grown in T175 flasks in DMEM plus 10% Fetal Bovine Serum, with the virus at an Multiplicity of Infection (MOI) of 0.001 vp/cell. The virus-containing culture supernatant was harvested at day 6 post-infection and cleared by centrifugation. The resulting virus preparation was titrated on Vero cells, using methods known to persons skilled in the art, and seeded in 96-well plates following standard procedures (Bin et al. 2001; Malkinson et al. 2001). The titer was determined to be 10^{10.66} or 4.57x10¹⁰ CCID₅₀/ml (Cell Culture Infectious Dose 50 per ml) for the virus produced on cells as deposited under ECACC no. 96022940 and 10^{10.83} or 6.76x10¹⁰ CCID₅₀/ml for the virus produced on mouse brain. The results of the titration on Vero cells are given in Figure 4.

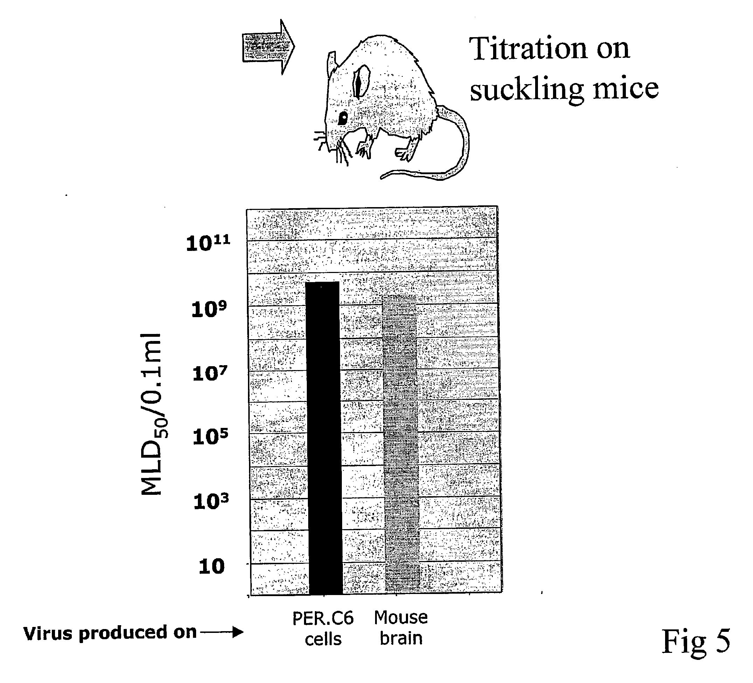

The virus preparation was also titrated in suckling mice by intra-cranial (i.c., NB: i.c. may also indicate intra-cerebrally; all i.c. injections were meant to be directly in the brain) injection of 0.03 ml of 10-fold serial dilutions of the culture supernatant. Mice were observed for mortality over a 9-day period. The mortality titer for the PER.C6 produced viruses was found to be 10^{9.76} MLD₅₀/0.1 ml (mouse lethal dose 50 per 0.1 ml) , while the titer of the virus preparation from mouse brain was found to be 10^{9.63}MLD₅₀/0.1 ml, as shown in Figure 5.

The virus preparation was inactivated by adding 1 ml formaldehyde (stock solution of 4%) to 100 ml virus-containing PER.C6™ supernatant and by stirring this solution at 4°C for 4 weeks. Inactivation was checked by titration of the inactivated material in suckling mice as follows: 0.03 ml of inactivated antigen was injected i.c. in suckling mice, that were subsequently observed for 14 days for mortality. No mortality was observed in any of the animals. Thus, it is shown here that E1-transformed cells can sustain the growth of the Goose Israel 1998 West Nile Virus strain to very high titers and that the produced West Nile Viruses can be inactivated sufficiently by the treatment of formaldehyde.

### Example 6. Animal vaccination/challenge study using a PER.C6™-produced West Nile vaccine in comparison with a Mouse brain-produced vaccine.

Two-weeks old geese were vaccinated subcutaneous on day 0 and boosted with the same volume on day 14 according to the scheme as depicted in Table IV. General methods were as described by Malkinson et al. (2001), while also the Mouse brain vaccine (serving as a positive control) was produced as described by Malkinson et al. (2001). Mineral oil, which is a common additive in veterinary vaccines and used as an adjuvant, was blended with the preparation and used to form a suitable vaccine/adjuvant mixture. Some groups receiving the inactivated virus produced on PER.C6 received no mineral oil, while the positive control group did, as shown in Table IV. Although Mineral Oil is a well-recognized adjuvant in the art of veterinary vaccines, it is unlikely to be used in humans. Therefore, it is desired to prepare vaccines comprising adjuvant reagents that are acceptable for use in humans. An example of such an adjuvant is 'Alum', or aluminium hydroxide, also known to persons skilled in the art. It is to be understood that all adjuvant reagents that are acceptable for use in humans can or may be used with the inactivated West Nile Viruses.

All animals were challenged with West Nile Virus strain Goose Israel 1998 at day 21 after the boost injection (day 35 from start of vaccination). Animals were observed daily for signs of disease and mortality for a period of 3 weeks after challenge. Blood samples were taken from all animals before each vaccination and boost and before challenge and from animals surviving the challenge after 3 weeks.

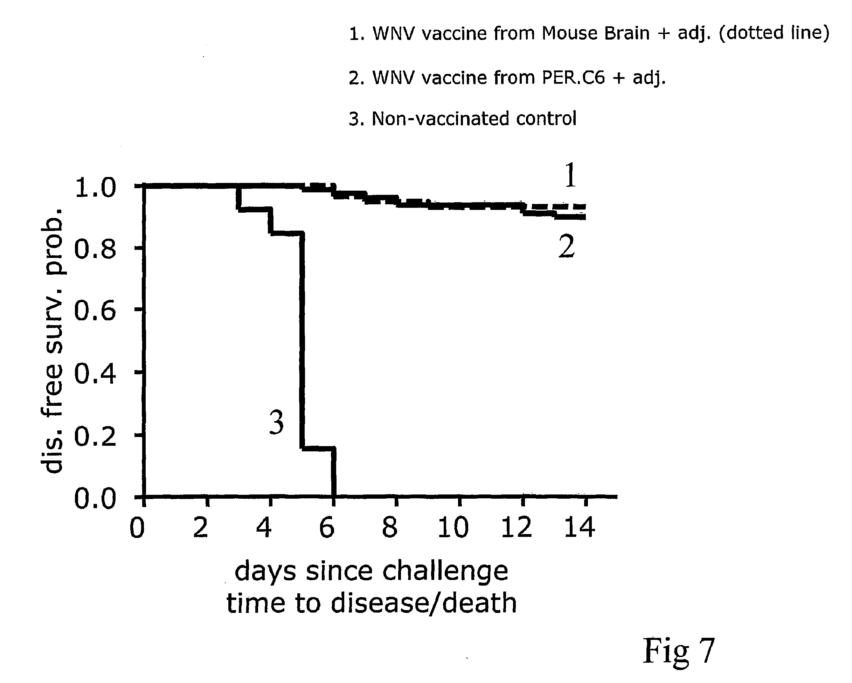

The results of these experiments are shown in Table V and VI, and clearly indicate that the PER.C6 produced West Nile Viruses (in an inactivated form and in the combination with an adjuvant) are as potent as a vaccine as the vaccine produced on Mouse Brain. The survival rate in the animal groups receiving PER.C6 based vaccine plus mineral oil ranges from 88% to 92.3% (with all three groups averaged to 89.7%, which equal 70 animals out of 78 being disease-free), while the Mouse Brain based vaccine plus mineral oil ranges from 89.5% to 95% (with all three groups averaged to 93%, which equals 53 animals out of 57 being disease-free). Whether the difference between the rates found with the PER.C6 versus the Mouse Brain based vaccine is significant cannot be determined, since the number of animals in both groups is too low. The percentage of survival in the negative control group was 0%, which is a significant difference compared to the groups that received a vaccine; all animals in the negative control group died within 6 days upon challenge. The results are also depicted graphically in figure 6 for the three separate volumes used (Figure 6A: 0.25 ml, Figure 6B: 0.5 ml and Figure 6C: 1.0 ml). The group receiving the Mouse Brain-based vaccine is indicated with a dotted line 1, the group receiving the PER.C6-based vaccine + adjuvant is indicated with line 2, the group receiving the PER.C6-based vaccine minus adjuvant is indicated with line 3, and the negative control group is indicated with line 4. Figure 7 shows the results summarized in Table VI for the three volume groups taken together and also clearly indicates that the PER.C6 based vaccine (line 2) is as potent as the Mouse Brain based vaccine (dotted line 1) as compared to the negative control (line 3) in this goose model.

### Example 7. Cross-protection using different Lineage I and II West Nile Virus strains in an animal study.

The West Nile Virus strains depicted in Table VII are used in a cross-protection study to prevent disease. This is to investigate the possibility of obtaining cross-protection against a Lineage I strain (associated with severe disease) by using a vaccine based on a Lineage II strain (associated with mild disease), when the vaccine is made of inactivated West Nile Viruses produced in E1 transformed cells such as PER.C6. Some strains exhibit very low neuroinvasion ability when administered intra-peritoneal (i.p.), while others do better. For instance, it is known from the art that the NY 99 (Lineage I) strain has a LD₅₀ (Lethal Dose 50) of only 0.5 plaque forming units (pfu) when administered i.p., while other strains such as Kunjin 1960 (Lineage I) and Cyprus 1968 (Lineage II) have a LD₅₀ dose of more than 10,000 pfu when administered i.p. If the viruses are administered intra-cranial no big difference in neurovirulence is found. These aspects of these strains are known in the art.

Because of safety reasons it is preferable to use a Lineage II strain for the production of a vaccine that will give protection against disease caused by Lineage I strains. For this, the strains depicted in Table VII were all grown on PER.C6 and are subsequently inactivated as described above. The inactivated viruses are mixed with the appropriate adjuvant (most likely mineral oil for geese) and used in a vaccination/boost/challenge study as outlined above. Different groups of animals are used for the different vaccines, while the challenge is performed with the Goose Israel 1998 and the New York 1999 (NY 99) strains. If a Lineage II strain-based vaccine gives sufficient protection against a Lineage I virus challenge, and if the passage history of the preferred strain is acceptable (for safety reasons), such strain is preferably the basis for a vaccine that is to be used in humans.

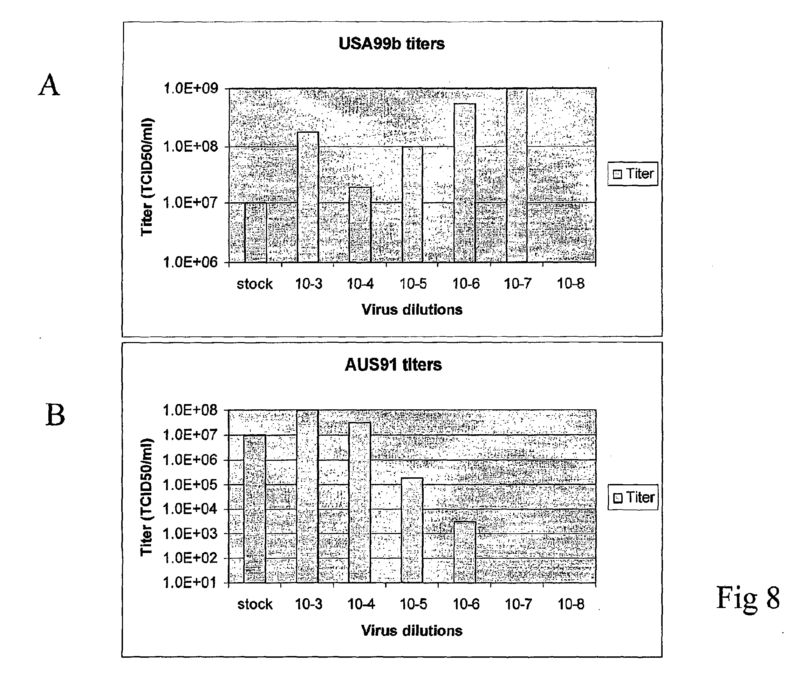

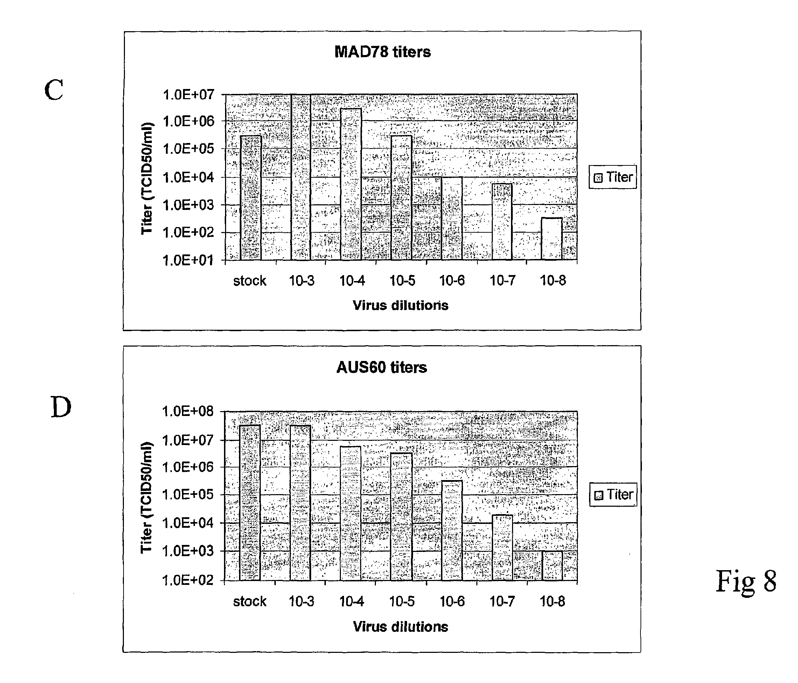

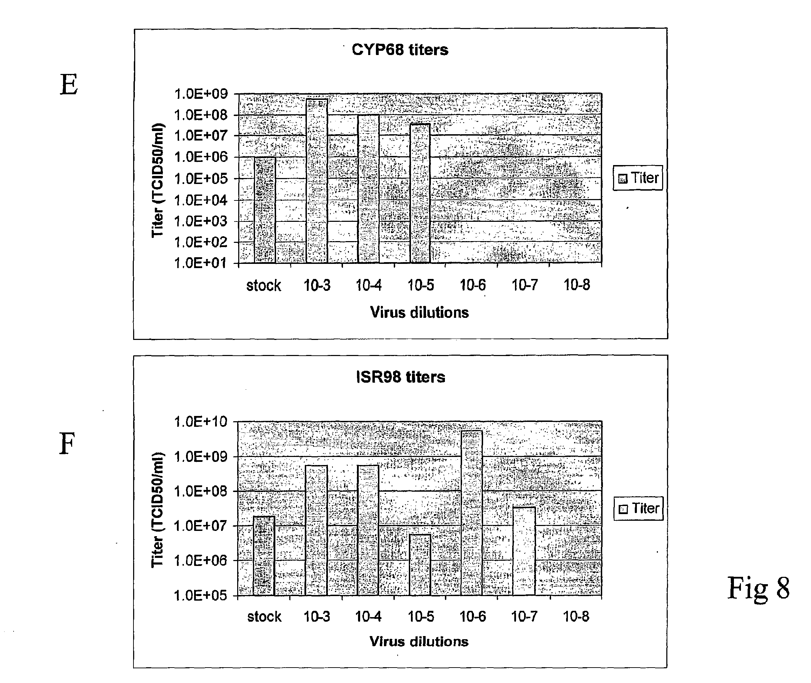

Infection of cells as deposited under ECACC no. 96022940 with the different West Nile Virus strains was generally performed as follows. Cells were trypsinized, numbers were determined and cells were seeded in 25 cm² flasks using 5x10⁶ cells per 5 ml DMEM, 5% FBS medium per flask. Cells were incubated for 24 h at 37°C under 10% CO₂. Before infection the medium was replaced with fresh DMEM +5% FBS. The general assumption is that the cell number is doubled since seeding, after which the multiplicity of infection (MLD50 or TCID50/cell) could be determined. Then the viruses were added and incubated with the cells at 37°C 10% CO₂ for several days. Then, when full cpe had occurred, cells and medium were harvested and supernatant was clarified by centrifugation, 10 min at 2000 rpm. Subsequently, produced virus titers after using different virus dilutions were determined. Results regarding cpe are depicted in Tables VIII to XIII, while the TCID50 titers obtained using the different virus dilutions are given in Figures 8A to F. The highest titers in TCID50/ml for each strain were (with the specific input moi between brackets):
USA99b: 1x10⁹ (5x10⁻⁷)
Isr98: 5.6x10⁹ (8.9x10⁻⁶)
Mad78: 1x10⁷ (1.6x10⁻⁴)
Cyp68: 5.6x10⁸ (5x10⁻⁴)
Aus60: 3.2x10⁷ (1.6x10⁻²)
Aus91: 1x10⁸ (5x10⁻³)_{.}

These results show that all tested West Nile Virus strains grow on PER.C6 to significant titers using relatively low moi's, albeit with different efficiencies. The best harvest days seem to be day 5 or day 6 but this may depend on the culture set-up, the density of the cells, media, scale, and other culture conditions.

### Example 8. Protection study using whole-inactivated vaccines with West Nile Virus produced on PER.C6 in combination with different adjuvant compounds.

A double blind vehicle controlled study to assess the effect of aluminium hydroxide and aluminium phosphate adjuvants on the efficacy of a PER.C6 based West Nile vaccine in geese was performed. In a previous proof of concept experiment, full protection of geese by vaccination with a PER.C6 based experimental WN vaccine was found using mineral oil as adjuvant (see Example 6). However, mineral oil cannot be used in vaccines for human applications. This implicates the requirement of testing alternative adjuvants that were previously approved for human use.

Aluminum-based adjuvants have been used for decades to increase the immune response of vaccines for human and animal use. Two types of aluminum-base adjuvants, Rehydragel aluminum hydroxide and Rehydraphos aluminum phosphate were tested for the immune potentiating effect in PER.C6-based West Nile Virus vaccines. The endpoint was a percentage of disease free survival in the test groups with adjuvant that was twice the percentage of that obtained in the group without adjuvant. Apart from investigating the effect of aluminum-based adjuvant, the study aimed at confirming the results of the previous study, using larger group sizes of geese and a double blind set-up.

The bulk material of the West Nile Virus produced on mouse brain in this study was produced as described (Malkinson et al. 2001) and titrated on VERO cells. The titer of this control vaccine was 10^{10.25} TCID50/ml and referred to as Mouse Brain-MV.

The PER.C6-based West Nile Virus bulk was produced by inoculating sub-confluent (80%) monolayers of PER.C6 cells, grown in T175 flasks in DMEM with FBS, with strain Goose Israel 1998 (Mouse brain derived) at a multiplicity of infection (moi) of 10⁻³. The virus-containing culture supernatant was harvested at day 6 post-infection and clarified by centrifugation at 1000 RPM for 20 min. The resulting virus preparation was titrated on VERO cells seeded in 96-well plates. The titer turned out to be 10^{10.66} TCID50/ml. The virus preparation was subsequently titrated in suckling mice by intra-cranial injection of 30 µ1 10-fold serial dilutions of the culture supernatant. Mice were observed for mortality over a 9- day period. The titer was 10^{9.76} MLD50/ml and referred to as PER.C6-WN.

A batch of supernatant from PER.C6 cells was produced under similar conditions as for PER.C6 cells infected with West Nile Viruses. However, for this, cells were not infected ('Sham' -infected) . Supernatant was harvested and clarified by centrifugation. This preparation was used as a negative control and referred to as PER.C6-SH.

The West Nile Virus bulk preparations from PER.C6 and the supernatant of Sham-infected PER.C6 cells were inactivated by adding 1 ml formaldehyde (stock solution of 4%) to 100 ml virus-containing PER.C6 supernatant and by stirring at 4°C for 4 weeks. Inactivation of the Mouse Brain-WN was performed using methods known in the art. Inactivation was controlled by titration of the inactivated material in suckling mice. To this end, 30 µl of 10-fold serial dilutions (10^{4.0}- 10^{10.0}) were injected intra-cranial in suckling mice. The animals were subsequently observed for mortality over 9 days. The resulting titers were sufficiently low; no live harmful virus was detectable using this animal test assay.

PER.C6-WN was formulated with Rehydragel LV containing 2% Al₂O₃ (Reheis) as follows: 98.75 ml of DMEM, 5% FBS was added to 35 ml of clarified inactivated virus bulk (pH 7.2-7.4) and mixed in a clean sterile 250 ml bottle. Subsequently, 6.25 ml of Rehydragel LV was added. The solution was manually swirled and then set on an orbital shaker set at 90 rpm for 1 h 25 min at 20°C. The formulated vaccine, referred to as PER.C6-WN-AlOH was then aliquotted aseptically at 23 ml/vial (6 vials) and stored at 4°C.

PER.C6-WN was formulated with Rehydraphos containing 2% solid aluminium phosphate (Reheis) as follows: 98.75 ml of DMEM, 5% FBS was added to 35 ml of clarified inactivated virus bulk (pH 7.2-7.4) and mixed in a clean sterile 250 ml bottle. Subsequently, 6.25 ml of Rehydraphos was added. The solution was manually swirled and then set on an orbital shaker set at 90 rpm for 1 h 25 min at 20°C. The formulated vaccine, referred to as PER.C6-WN-AlPh was then aliquotted aseptically at 23 ml/vial (6 vials) and stored at 4°C.

PER.C6-WN was formulated as follows to obtain a vaccine without adjuvant: 105 ml medium was added to 35 ml of clarified inactivated virus bulk (pH 7.2-7.4) in a clean sterile 250 ml bottle. The solution was manually swirled and then set on an orbital shaker set at 90 rpm for 1 h 25 min at 20°C. The vaccine was then aliquotted aseptically at 23 ml/vial (6 vials) and stored at 4°C.

PER.C6-SH was formulated with Rehydragel as follows: 33.85 ml medium was added to 12 ml of clarified inactivated virus bulk (pH 7.2-7.4) in a clean sterile 100 ml bottle. Subsequently, 2.15 ml of Rehydragel LV was added. The solution was manually swirled and then set on an orbital shaker set at 90 rpm for 1 h 25 min at 20°C. The vaccine referred to as PER.C6-SH-AlOH, was then aliquotted aseptically at 24 ml/vial (2 vials) and stored at 4°C.

PER.C6-SH was formulated with Rehydraphos as follows: 33.85 ml medium was added to 12 ml of clarified inactivated virus bulk (pH 7.2-7.4) in a clean sterile 100 ml bottle. Subsequently, 2.15 ml of Rehydraphos was added. The solution was manually swirled and then set on an orbital shaker set at 90 rpm for 1 h 25 min at 20°C. The vaccine referred to as PER.C6-SH-AlPh, was then aliquotted aseptically at 24 ml/vial (2 vials) and stored at 4°C.

PER.C6-SH was formulated as follows to obtain a control vaccine without adjuvant: 36 ml medium was added to 12 ml of clarified inactivated virus bulk (pH 7.2-7.4) in a clean sterile 100 ml bottle. The solution was manually swirled and then set on an orbital shaker set at 90 rpm for 1 h 25 min at 20°C. The vaccine was then aliquotted aseptically at 24 ml/vial (2 vials) and stored at 4°C.

Mouse Brain-WN, PER.C6-WN and PER.C6-SH vaccines were formulated with Mineral Oil using methods known to persons skilled in the art of adjuvating vaccines. These preparations were referred to as Mouse Brain-WN-MO, PER.C6-WN-MO and PER.C6-SH-MO respectively.

The study enrolled 400 geese (*Anser anser,* females and males, 3 weeks old) . All animals were housed in rooms grouped according to their vaccination separate from other animals (Group size: n=20). All the rooms were fitted with mosquito proof netting. All animals included in this study were monitored daily for behavior and general health. At day 0 prior to the administration of the primary injection and at days 14 and 35, prior to the second injection and challenge with West Nile Virus, respectively, blood samples were collected from all animals from the jugular vein. Sera, processed from blood samples were used in anti-WN-E protein ELISA assays and in plaque reduction neutralization (PRNT) assays.

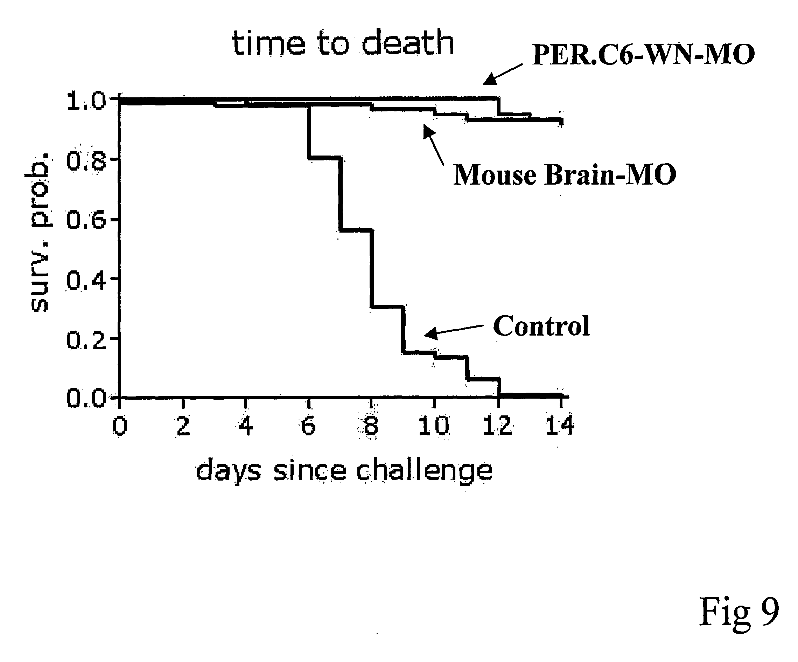

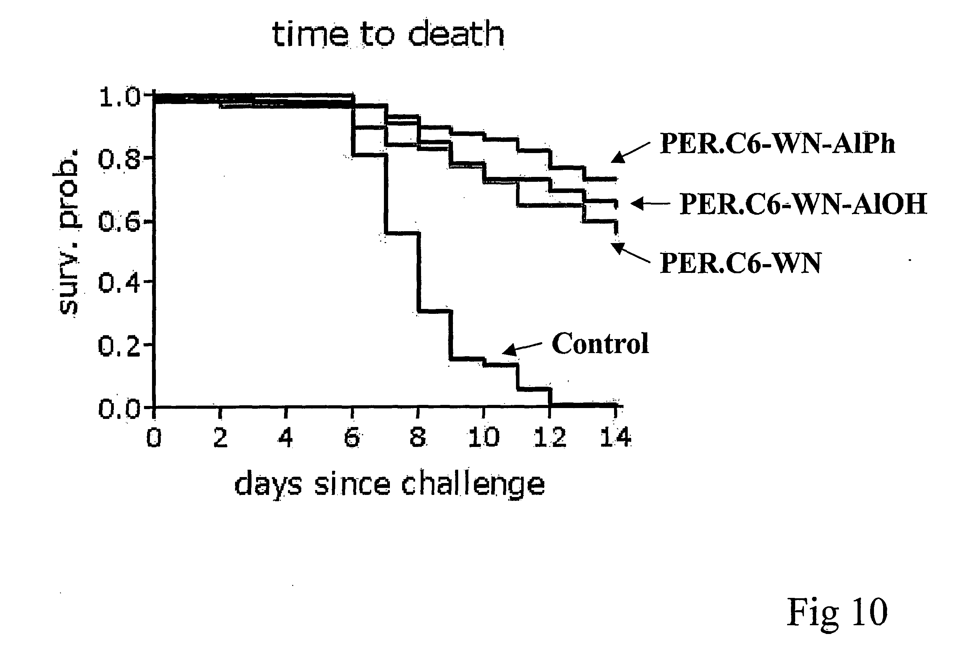

The geese were divided and treated as shown in Table XIV. Injections were performed on days 0 and 14. One ml per injection was administered subcutaneously in the neck (s.c.). On day 35 (3 weeks after the second vaccination) all the animals were challenged intra-cerebrally (i.c.). The West Nile challenge virus (Goose Israel 1998) was passaged three times in VERO cells and titrated in VERO cells. A stock of virus was aliquotted and stored at - 70°C. The virus was inoculated intra-cranially into the geese at a dose of 10^{2.0} TCID50/0.1 ml. After challenge animals were scored for morbidity and mortality twice daily. Among the 400 geese included in the experiment, 14 geese died during the study. Two animals died in the Mouse Brain-MO group (leaving 58 animals for challenge), while also in the PER.C6-WN-MO group two animals died before challenge. All the animals that died before challenge were included in the statistical analysis, since the risk of vaccination has to be taken into account (intention-to-treat analysis). The results are shown in Tables XV to XVIII and figures 9 and 10.

Clearly, the data indicates that a West Nile Virus vaccine produced on PER.C6 raises a proper protection against a West Nile Virus challenge, which confirms the earlier findings with smaller groups of geese. It seems as if the mineral oil adjuvant works best in these veterinary vaccines using geese. The difference between the data obtained with the Mouse Brain vaccine plus mineral oil (Mouse brain-MO) and PER.C6 based vaccine plus mineral oil (PER.C6-WN-MO) is not significant, which indicates that (in this large group of animals) both vaccines are highly suited for use as a veterinary vaccine. The data also shows that the difference between Mouse Brain-MO and PER.C6-WN-AlOH is significant, which means that in geese a significantly lower number of animals are protected against disease and death when the aluminum hydroxide adjuvant is applied, as compared to the use of mineral oil. The same holds true for the aluminum phosphate adjuvant in comparison to mineral oil. However, since the number of surviving animals in the groups that received a PER.C6 based West Nile Virus vaccine without an adjuvant is lower than in the groups with an adjuvant, this data is indicative that an adjuvant adds to the protection capacity of the vaccine.

Although these results suggest that mineral oil is the best-suited adjuvant, this cannot be extrapolated to the human situation. First, mineral oil is not suited for human use, so it will be hard to test whether these results will be reflected in the human situation, and second, humans may be more responsive towards aluminum-based adjuvants than animals such as geese. Studies towards the most suitable adjuvant for human use in combination with the PER.C6 based West Nile Virus vaccine are to be performed. We predict that a vaccine preparation with Alum (aluminium hydroxide or aluminium phosphate) as adjuvant will be useful to protect humans against West Nile Virus infections.

### Example 9. Production of West Nile Viruses on suspension-growing PER.C6 cells.

For high volume culture of cells *in vitro,* it is preferred to grow the cells in dense cultures to subsequently reach the highest titers of viruses produced. For high-density culture it is preferred that cells grow in suspension instead of in attached settings. PER.C6 is a cell line that has proven to grow well in both settings. An experiment was performed to see whether suspension growing PER.C6 cells could sustain the growth of West Nile Viruses and to compare these results to the production in attached settings. Example 7 already showed that different West Nile Viruses could infect PER.C6 cells and that these cells (in attached setting) were able to sustain growth to significant titers. For the suspension growth, two different available suspension culture media were used: VPRO (JRH) and APM (Gibco).

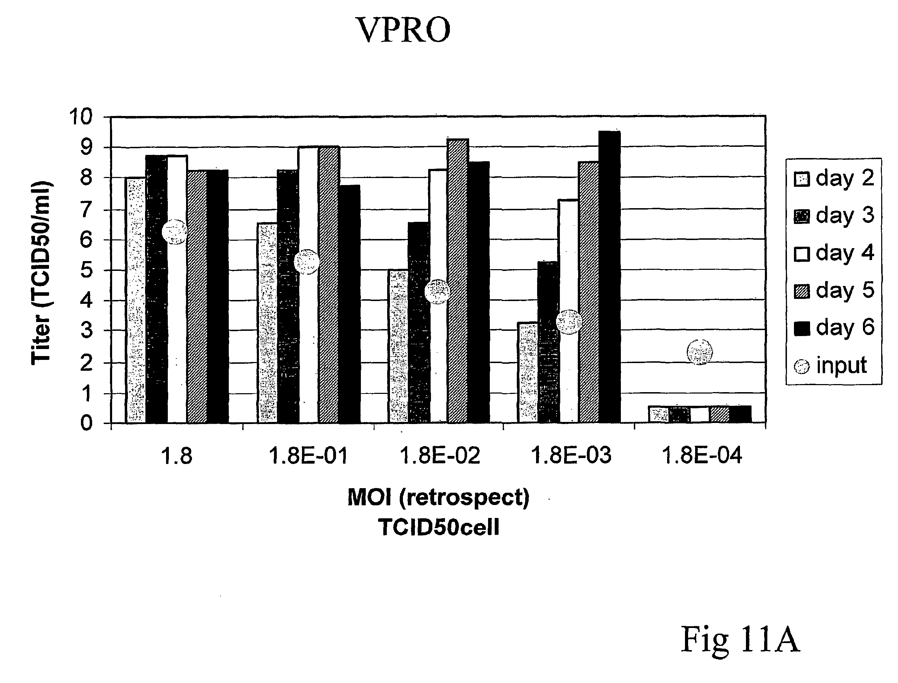

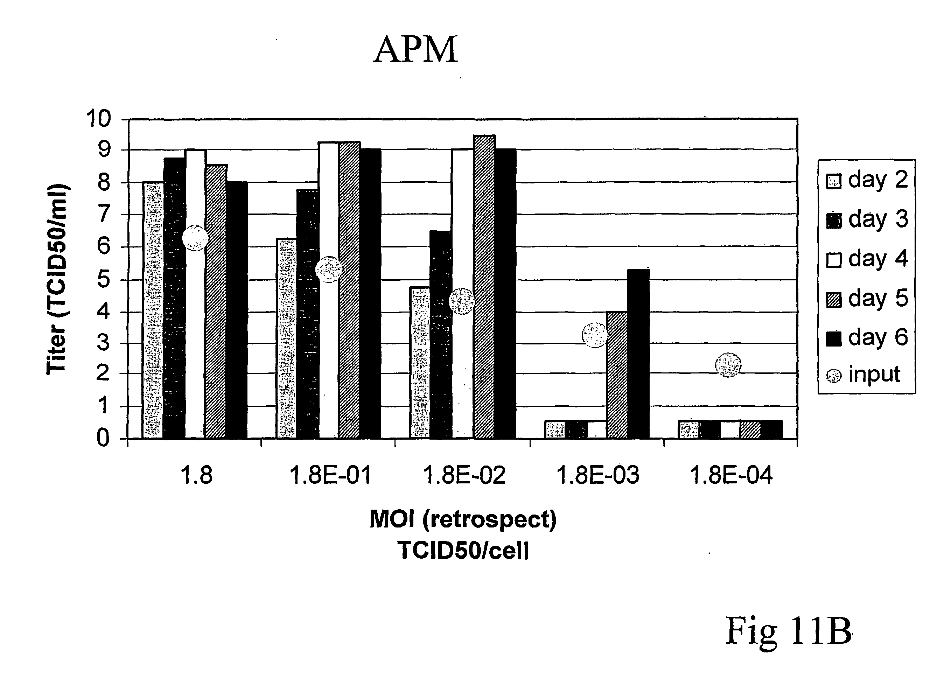

The experiment was performed as follows: 6-wells plates containing 1x10⁶ cells per ml were inoculated with different input virus moi's. Samples were taken on day 2, 3, 4, 5 and 6 post infection and TCID50/ml titers were determined. The results are depicted in figure 11A (VPRO medium) and figure 11B (APM medium).

The results indicate that suspension-growing PER.C6 cells are well capable of sustaining growth of West Nile Virus to high titers. Thus, this indicates that PER.C6 is a proper choice for growing West Nile Viruses for obtaining large batches and thereby obtaining large amounts of vaccines for both human as well as veterinary use in a safe, clean and easy-to-handle high-throughput way.

**Table I. Identified lineage I and II strains of West Nile Viruses (from Lanciotti et al. 2002).**

| Lineage I strains | Lineage II strains |
|---|---|
| Egypt 1951 | Kenya |
| France 1965 | Uganda |
| South Africa | Senegal 1990 |
| Israel 1952 | Uganda 1937 |
| Romania 1996 M | C. Afr. Rep 1972a |
| Kenya 1998 | C. Afr. Rep 1972b |
| Senegal 1993 | C. Afr. Rep 1983 |
| Morocco 1996 | Uganda 1959 |
| Italy 1998 | Madagascar 1988 |
| Volgograd 1999 | Madagascar 1986 |
| New York 1999 | Madagascar 1978 |
| Goose Israel 1998 | Cyprus 1968 |
| NY2000 3282 | |
| NY2000 3356 | |
| NY 1999 equine | |
| NY 1999 hum | |
| Conn 1999 | |
| Romania 1996 | |
| Romania 1996 H | |
| MD 2000 | |
| NJ 2000 | |
| Israel 1999 H | |
| C. Afr. Rep 1989 | |
| Senegal 1979 | |
| Algeria 1968 | |
| C. Afr. Rep 1967 | |
| Ivory Coast 1981 | |
| Kunjin (strains 1960, 1973, 1984b,1991,1984a,1966 and 1994) | |
| India (strains 1955a, 1980,1958,1955b) | |

Table II. CPE score (in %) on PER.C6 cells infected with serial dilutions of West Nile Virus B956 (moi's range from 5 to 5x10⁻⁷ pfu/cell). CPE was scored 24 h, 48 h and 72 h post-infection. Input virus titer was 5x10⁸ pfu/ml as determined in plaque assays using Vero cells, using general methods applied in the art. CPE was not scored on the samples depicted as 'nd', these were discarded since full CPE was already detected at 48 h post-infection.

| | | | % CPE | | |
|---|---|---|---|---|---|
| Dilution (v/v) | moi (pfu/cell) | Input virus (pfu's/flask) | 24 h post-infection | 48 h post-infection | 72 h post-infection |
| mock | 0 | 0 | 0 | 0 | 0 |
| 10⁻¹ | 5 | 5x10⁷ | 0 | 100 | nd |
| 10⁻² | 5x10⁻¹ | 5x10⁶ | 0 | 100 | nd |
| 10⁻³ | 5x10⁻² | 5x10⁵ | 0 | 50 | 100 |
| 10⁻⁴ | 5x10⁻³ | 5x10⁴ | 0 | 5 | 100 |
| 10⁻⁵ | 5x10⁻⁴ | 5x10³ | 0 | 0 | 80 |
| 10⁻⁶ | 5x10⁻⁵ | 5x10² | 0 | 0 | 50 |
| 10⁻⁷ | 5x10⁻⁶ | 50 | 0 | 0 | 0 |
| 10⁻⁸ | 5x10⁻⁷ | 5 | 0 | 0 | 0 |

Table III. West Nile Virus titers as determined by real-time RT-TaqMan PCR. Titers are given in pfu/ml (right columns depicted as 24 h, 48 h and 72 h post-infection).

| Dilution | moi pfu/cell | Input virus pfu/flask | 24 h post-infection | 48 h post-infection | 72 h post-infection |
|---|---|---|---|---|---|
| 10⁻¹ | 5 | 5x10⁷ | 3,6x10⁷ | 5,9x10⁷ | nd |
| 10⁻² | 5x10⁻¹ | 5x10⁶ | 6,5x10⁶ | 2,7x10⁷ | nd |
| 10⁻³ | 5x10⁻² | 5x10⁵ | 1,9x10⁶ | 6,1x10⁷ | nd |
| 10⁻⁴ | 5x10⁻³ | 5x10⁴ | 2,5x10⁵ | 1,9x10⁷ | 1,0x10⁹ |
| 10⁻⁵ | 5x10⁻⁴ | 5x10³ | 2,2x10⁴ | 5,7x10⁶ | 4,3x10⁸ |
| 10⁻⁶ | 5x10⁻⁵ | 5x10² | 5,6x10³ | 7,1x10⁵ | 1,5x10⁸ |
| 10⁻⁷ | 5x10⁻⁶ | 50 | 3,4x10³ | 7,9x10⁴ | 9,8x10⁷ |
| 10⁻⁸ | 5x10⁻⁷ | 5 | 5,5x10³ | 4,2x10³ | 1,2x10⁶ |

Table IV. Vaccination scheme using PER.C6™ based West Nile vaccine and a Mouse brain produced West Nile vaccine in two-week old geese.

| **PART A** | | | | |
|---|---|---|---|---|
| **Group (n=)** | **Material** | **Volume** | **Vaccination** | **Adjuvant** |
| 1. 20 | WN vaccine PER.C6™ | 0.25 ml | Day 0 Day 14 | None |
| 2 22 | WN vaccine PER.C6™ | 0.5 ml | Day 0 Day 14 | None |
| 3 23 | WN vaccine PER.C6™ | 1 ml | Day 0 Day 14 | None |

| **PART B** | | | | |
|---|---|---|---|---|
| 1. 25 | WN vaccine PER.C6™ | 0.25 ml | Day 0 Day 14 | Mineral oil |
| 2 25 | WN vaccine PER.C6™ | 0.5 ml | Day 0 Day 14 | Mineral oil |
| 3 28 | WN vaccine PER.C6™ | 1.0 ml | Day 0 Day 14 | Mineral oil |

| **PART C** | | | | |
|---|---|---|---|---|
| 1. 19 | Mouse brain vaccine | 0.25 ml | Day 0 Day 14 | Mineral oil |
| 2. 20 | Mouse brain vaccine | 0.5 ml | Day 0 Day 14 | Mineral oil |
| 3 18 | Mouse brain vaccine | 1.0 ml | Day 0 Day 14 | Mineral oil |
| 4. 13 | No Vaccine | | | |

Table V. Results of the experiment showing the percentage of geese surviving (and being disease free) upon vaccination with whole inactivated West Nile Viruses (WNV) produced in tissue culture using PER.C6™ cells or using mouse brains (MB) and challenged with West Nile Virus strain Goose Israel 1998. Certain West Nile Virus vaccines held Mineral Oil as an adjuvant, as indicated. The volume of the vaccine as described in the description is also indicated. N = the number of animals per group. The control group of 13 animals did not receive any vaccine and all died upon challenge.

| Vaccine | Volume | Adjuvant | N | Disease/ Death | Disease free /survival |
|---|---|---|---|---|---|
| WNV PER.C6 | 1.0 ml | None | 23 | 15 | 34.8% |
| WNV PER.C6 | 0.5 ml | None | 22 | 10 | 54.6% |
| WNV PER.C6 | 0.25 ml | None | 20 | 11 | 45.0% |
| WNV PER.C6 | 1.0 ml | Mineral Oil | 28 | 2 | 92.9% |
| WNV PER.C6 | 0.5 ml | Mineral Oil | 25 | 3 | 88.0% |
| WNV PER.C6 | 0.25 ml | Mineral Oil | 25 | 3 | 88.0% |
| WNV MB | 1.0 ml | Mineral Oil | 18 | 1 | 94.4% |
| WNV MB | 0.5 ml | Mineral Oil | 20 | 1 | 95.0% |
| WNV MB | 0.25 ml | Mineral Oil | 19 | 2 | 89.5% |
| Control | --- | --- | 13 | 13 | 0% |

Table VI. The results of Table V taken together for the geese groups that received the Mouse Brain-derived vaccine and the PER.C6™-derived vaccine (all with Mineral Oil as adjuvant) as compared to the control group that did not receive vaccination.

| Vaccine | Adjuvant | N | Disease/ Death | Disease free /survival |
|---|---|---|---|---|
| WNV PER.C6 | Mineral Oil | 78 | 8 | 89.7% |
| WNV MB | Mineral Oil | 57 | 4 | 93.0% |
| Control | --- | 13 | 13 | 0% |

Table VII. Selection of Lineage I and II West Nile Virus strains used in a cross-protection assay in geese. Viruses of the different strains were produced in PER.C6. They are purified, inactivated, mixed with adjuvant and used for a protection against a challenge with live Goose Israel 1998 and New York 1999 West Nile Viruses. The right two columns give the inoculation LD₅₀ in pfu for each of the strains as it is known from the art with respect to neuroinvasion upon intra-peritoneal (i.p.) administration or with respect to neurovirulence upon intra-cranial administration.

| Lineage | Strain | i.p. | i.c. |
|---|---|---|---|
| I | Goose Israel 1998 (Isr98) | n.d. | 0.1 |
| I | New York 1999 (USA99b) | 0.5 | 0.1 |
| I | Kunjin 1960 (Aus60) | >10,000 | n.d. |
| I | Kunjin 1991 (Aus91) | >10,000 | 3.2 |
| II | Cyprus 1968 (Cyp68) | >10,000 | 0.5 |
| II | Madagascar 1978 (Mad78) | >10,000 | n.d. |

**Table VIII. cpe scores after infection of PER.C6 cells with West Nile Virus New York 1999 (NY99 isolated from a Snowy Owl, The Bronx Zoo, New York)**

| **USA99b** | | | | | |
|---|---|---|---|---|---|
| dilutions | day 2 | day 3 | day 4 | day 5 | day 6 |
| 10-3 | + (<1%) | +(75%) | full cpe | na | na |
| 10-4 | - | + (25%) | + (75%) | full cpe | na |
| 10-5 | - | + (1 %) | + (1 %) | + (10%) | + (75%) |
| 10-6 | - | - | + (<1 %) | + (<1%) | + (25-50%) |
| 10-7 | - | **-** | +(<1%) | + (<1 %) | + (5%) |
| 10-8 | - | - | - | - | - |

**Table IX. cpe scores after infection of PER.C6 cells with West Nile Virus Aus91 (strain Kunjin 1991 [K 6453], isolated in Australia from Culex annulirostris mosquitoes in 1991)**

| **AUS91** | | | | | |
|---|---|---|---|---|---|
| dilutions | day 2 | day 3 | day 4 | day 5 | day 6 |
| 10-3 | - | + (1 %) | +(1-5%) | +(10%) | + (1-5%) |
| 10-4 | | - | +(<1%) | + (1%) | + (1%) |
| 10-5 | - | - | - | - | - |
| 10-6 | - | - | - | - | - |
| 10-7 | - | - | - | - | - |
| 10-8 | - | - | - | - | - |

**Table X. cpe scores after infection of PER.C6 cells with West Nile Virus Mad78 (strain Madagascar 1998)**

| **MAD78** | | | | | |
|---|---|---|---|---|---|
| dilutions | day 2 | day 3 | day 4 | day 5 | day 6 |
| 10-3 | - | - | - | +(1%) | + (1%) |
| 10-4 | - | - | - | - | +(<1%) |
| 10-5 | - | - | - | - | - |
| 10-6 | - | - | - | - | - |
| 10-7 | - | - | - | - | - |
| 10-8 | - | - | - | - | - |

**Table XI. cpe scores after infection of PER.C6 cells with West Nile Virus Aus60 (strain Kunjin 1960 [MRM 16], isolated in Australia from Culex annulirostris mosquitoes in 1960)**

| **AUS60** | | | | | |
|---|---|---|---|---|---|
| dilutions | day 2 | day 3 | day 4 | day 5 | day 6 |
| 10-3 | - | - | + (25%) | + (50-75%) + | (75%) |
| 10-4 | - | - | + (1-5%) | + (1-5%) | + (10%) |
| 10-5 | - | | - | +(<1%) | +(1%) |
| 10-6 | - | - | - | + (<1%) | - |
| 10-7 | - | - | - | - | - |
| 10-8 | - | - | - | - | - |

**Table XII. cpe scores after infection of PER.C6 cells with West Nile Virus Cyp68 (strain Cyprus 1968)**

| **CYP68** | | | | | |
|---|---|---|---|---|---|
| dilutions | day 2 | day 3 | day 4 | day 5 | day 6 |
| 10-3 | - | + (1 %) | + (1 %) | + (10%) | + (25%) |
| 10-4 | - | - | - | + (1%) | + (1%) |
| 10-5 | - | - | - | - | - |
| 10-6 | - | - | - | - | - |
| 10-7 | - | - | - | - | - |
| 10-8 | - | - | - | - | - |

**Table XIII. cpe scores after infection of PER.C6 cells with West Nile Virus Isr98 (strain Goose Israel 1998)**

| **ISR98** | | | | | |
|---|---|---|---|---|---|
| dilutions | day 2 | day 3 | day 4 | day 5 | day 6 |
| 10-3 | + (<1%) | + (50%) | full cpe | na | na |
| 10-4 | - | + (25%) | + 75%) | full cpe | na |
| 10-5 | - | + (1%) | + (1-5%) | + (50-75%) | full cpe |
| 10-6 | - | + (<1%) | + (<1%) | + (25%) | + (50%) |
| 10-7 | - | - | - | - | + (<1%) |
| 10-8 | - | - | - | - | - |

Table XIV. Vaccination scheme of geese using West Nile Virus vaccines comprising different adjuvant compounds.

| **Group size** | **Material** | **Volume** | **Injections** | **Adjuvant** |
|---|---|---|---|---|
| 3 x 20 | Mouse Brain WN-MO | 1 ml | Day 0 | Mineral oil |
| | | | Day 14 | |
| 3 x 20 | PERC6-WN-MO | 1ml | Day 0 | Mineral oil |
| | | | Day 14 | |
| 3 x 20 | PERC6-WN-AIOH | 1 ml | Day 0 | Aluminum hydroxide |
| | | | Day 14 Day 14 | Rehydragel^{®} |
| 3x20 | PERC6-WN-A)Ph | 1 ml | Day 0 | Aluminum phosphate |
| | | | Day 14 | |
| | | | | Rehydraphos^{®} |
| 3 x 20 | PER.C6-WN | 1 ml | Day 0 | None |
| | | | Day 14 | |
| 20 | PER.C6-SH | 1 ml | Day 0 | None |
| | | | Day 14 | |
| 20 | PER.C6-SH-AlOH | 1 ml | Day 0 | Aluminum hydroxide |
| | | | Day 14 | |
| | | | | Rehydragel^{®} |
| 20 | PER.C6-SH-AlPh | 1 ml | Day 0 | Aluminum phosphate |
| | | | Day 14 | |
| | | | | Rehydraphos^{®} |
| 20 | PER.C6-SH-MO | 1 ml | Day 0 | Mineral oil |
| | | | Day 14 | |
| 20 | PBS | 1ml | Day 0 | |
| | | | Day 14 | |

Table XV. Analysis with death taken as endpoint, intention to treat (safety and efficacy).

| | N | Survival | Survival Prob | 95% CI |
|---|---|---|---|---|
| Mouse Brain MO | 60 | 54 | 90.0% | 79.9 - 95.0% |
| PER.C6 WN MO | 60 | 53 | 88.3% | 77.8 - 94.2% |
| PER.C6 WN AlOH | 60 | 38 | 63.3% | 50.7 - 74.4% |
| PER.C6 WN AlPh | 60 | 41 | 68.3% | 55.8 - 78.7% |
| PER.C6 WN | 60 | 32 | 53.3% | 40.9 - 65.4% |
| PER.C6 SH | 20 | 0 | 0 | 0 - 16.1% |
| PER.C6 SH AlOH | 20 | 0 | 0 | 0 - 16.1% |
| PER.C6 SH AlPh | 20 | 0 | 0 | 0 - 16.1% |
| PER.C6 MO | 20 | 1 | 5.0% | 0.9 - 23.6% |
| PBS | 20 | 0 | 0 | 0 - 16.1% |

| | | | | |
|---|---|---|---|---|
| N = number of animals: CI - Confiden tiality Interval Risk difference between: Mouse Brain-MO and PER.C6-WN-MO: 1.7% (95% CI -9.5 - 12.8) not significant Mouse Brain-MO and PFR.C6-WN-AlOR: 26.7% (95% CI 12.3 - 41.0) significant | | | | |

**Table XVI. Analysis with death or diseased taken as endpoint (disease-free survival)**

| | N | df Survival | df Survival Prob | 95% CI |
|---|---|---|---|---|
| Mouse Brain MO | 60 | 54 | 90.0% | 79.9 - 95.0% |
| PER.C6 WN MO | 60 | 53 | 88.3% | 77.8 - 94.2% |
| *PER.C6 WN AlOH* | *60* | *31* | *51.7%* | *39.3 - 63.8%* |
| *PER.C6 WN AlPh* | *60* | *32* | *53.3%* | *40.9 - 65.4%* |
| *PER.C6 WN* | *60* | *25* | *41.7%* | *30.1 - 54.3%* |
| PER.C6 SH | 20 | 0 | 0 | 0 - 16.1% |
| PER.C6 SH AlOH | 20 | 0 | 0 | 0 - 16.1% |
| PER.C6 SH AlPh | 20 | 0 | 0 | 0 - 16.1% |
| PER.C6 MO | 20 | 1 | 5.0% | 0.9 - 23.6% |
| PBS | 20 | 0 | 0 | 0 - 16.1% |

| | | | | |
|---|---|---|---|---|
| Note: figures in italic indicate differences with table XV. N = number of animals; CI = Confident iality Interval Risk difference between: Mouse Brain-MO and PER.C6-WN-MO: 1.7 (95% CI -9.5 - 12.8%) not significant Mouse Brain-MO and PER.C6-WN-AlOH: 38.3 (95% CI 23.6 - 53.1%) significant | | | | |

**Table XVII. Analysis with death taken as endpoint among geese who are challenged with WN (to estimate true efficacy)**

| | N | Survival | Survival Prob | 95% CI |
|---|---|---|---|---|
| Mouse Brain MO | 58 | 54 | 93.1 | 83.6 - 97.3% |
| PER.C6 WN MO | 58 | 53 | 91.4 | 81.4 - 96.3% |
| PER.C6 WN AlOH | 59 | 38 | 64.4 | 51.7 - 75.4% |
| PER.C6 WN AlPh | 56 | 41 | 73.2 | 60.4 - 83.0% |
| PER.C6 WN | 57 | 32 | 56.1 | 43.3 - 68.2% |
| PER.C6 SH | 19 | 0 | 0 | 0 - 16.8% |
| PER.C6 SH AlOH | 20 | 0 | 0 | 0 - 16.1% |
| PER.C6 SH AlPh | 20 | 0 | 0 | 0 - 16.1% |
| PER.C6 MO | 20 | 1 | 5.0 | 0.9 - 23.6% |
| PBS | 19 | 0 | 0 | 0 - 16.8% |

| | | | | |
|---|---|---|---|---|
| N = number of animals; CI = Confidentiality Interval Risk difference between: Mouse Brain-MO and PER.C6-WN-MO: 1.7 (95% CI -8.0 - 11.5) not significant Mouse Brain-MO and PER.C6-WN-AlOH: 28.7 (95% CI 14.9 - 42.6) significant | | | | |

**Table XVIII. Analysis with endpoint 'death before challenge' to study the safety of vaccination**

| | N | Survival | Survival Prob | 95% CI |
|---|---|---|---|---|
| Mouse Brain MO | 60 | 58 | 96.7 | 88.6 - 99.1% |
| PER.C6 WN MO | 60 | 58 | 96.7 | 88.6 - 99.1% |
| PER.C6 WN AlOH | 60 | 59 | 98.3 | 91.1 - 99.7% |
| PER.C6 WN AlPh | 60 | 56 | 93.3 | 84.1 - 97.4% |
| PER.C6 WN | 60 | 57 | 95.0 | 86.3 - 98.3% |
| PER.C6 SH | 20 | 19 | 95 | 76.4 - 99.1% |
| PER.C6 SH AlOH | 20 | 20 | 100 | 83.9 - 100% |
| PER.C6 SH AlPh | 20 | 20 | 100 | 83.9 - 100% |
| PER.C6 MO | 20 | 20 | 100 | 83.9 - 100% |
| PBS | 20 | 19 | 95 | 76.4 - 99.1% |

| | | | | |
|---|---|---|---|---|
| N = number of animals; CI = Confidentiality Interval Risk difference between: Mouse Brain-MO and PER.C6-WN-MO: 0 (95% CI -6.4 - 6.4) not significant Mouse Brain-MO and PER.C6-WN-AlOH: 1.7 (95% CI -3.9 - 7.3) not significant | | | | |

### REFERENCES

Anderson JF, Andreadis TG, Vossbrinck CR, Tirrell S, Wakem EM, French RA, Garmendia AE and Van Kruiningen HJ (1999) Isolation of West Nile Virus from mosquitos, crows, and a Cooper's hawk in Connecticut. Science 286:2331-2333
Arroyo J, Miller CA, Catalan J and Monath TP (2001) Yellow fever vector live-virus vaccines: West Nile Virus vaccine development. Trends Mol Med 7:350-354
Bin H, Grossman Z, Pokamunski S, Malkinson M, Weiss L, Duvdevani P, Banet C, Weisman Y, Annis E, Gandaku D, Yahalom V, Hindyieh M, Shulman L and Mendelson E (2001) West Nile fever in Israel 1999-2000: from geese to humans. Ann N Y Acad Sci 951:127-142
Brinton MA (2002) The molecular biology of West Nile Virus: A new invader of the Western Hemisphere. Annu Rev Microbiol 56:371-402
Campbell GL, Marfin AA, Lanciotti RS and Gubler DJ (2002) West Nile Virus. Lancet Infect Dis 2:519-529
Chambers TJ, Hahn CS, Galler R and Rice CM (1990) Flavivirus genome organization, expression, and replication. Annu Rev Microbiol 44:649-688
Chang GJ, Davis BS, Hunt AR, Holmes DA and Kuno G (2001) Flavivirus DNA vaccines: current status and potential. Ann NY Acad Sci 951:272-285
Dunster LM, Gibson CA, Stephenson JR, Minor PD and Barrett AD (1990) Attenuation of virulence of flaviviruses following passage in HeLa cells. J Gen Virol 71:601-607
Hadfield TL, Turell M, Dempsey MP, David J and Park EJ (2001) Detection of West Nile Virus in mosquitoes by RT-PCR. Mol Cell Probes 15:147-150
Hubalek Z and HalouzkaJ (1999) West Nile fever - A reemerging mosquito-borne viral disease in Europe. Emerg Infect Dis 5:643-650
Jia XY, Briese T, Jordan I, Rambaut A, Chi HC, Mackenzie JS, Hall RA, Scherret J and Lipkin WI (1999) Genetic analysis of West Nile New York 1999 encephalitis virus. Lancet 354:1971-1972
Kurane I, Janus J and Ennis FA (1992) Dengue virus infection of human skin fibroblasts in vitro production of IFN-beta, IL-6 and GM-CSF. Arch Virol 124:21-30
Lanciotti RS, Roehrig JT, Deubel V, et al. (1999) Origin of the West Nile Virus responsible for an outbreak of encephalitis in the northeastern United States. Science 286:2333-2337
Lanciotti RS, Kerst AJ, Nasci RS, et al. (2000) Rapid detection of West Nile Virus from human clinical specimens, field-collected mosquitoes, and avian samples by a TaqMan reverse transcriptase-PCR assay. J Clin Microbiol 38:4066-4071
Lanciotti RS, Ebel GD, Deubel V, et al. (2002) Complete genome sequences and phylogenetic analysis of West Nile Virus strains isolated from the United States, Europe and the Middle East. Virology 298:96-105
Malkinson M, Banet C, Mahany S, et al. (1998) Virus encephalomyelitis of geese: some properties of the viral isolate. Isr J Vet Med 53:44.
Malkinson M, Banet C, Khinich Y, Samina I, Pokamunski S and Weisman Y (2001) Use of live and inactivated vaccines in the control of West Nile fever in domestic geese. Ann N Y Acad Sci 951:255-261
Monath TP (2001) Prospects for development of a vaccine against the West Nile Virus. Ann NY Acad Sci 951:1-12
Smithburn KC, Hughes TP, Burke AV and Paul JH (1940) A neurotropic virus isolated from the blood of a native of Uganda. Am J Trop Med Hyg 20:471-492
Wang T, Anderson JF, Magnarelli LA, Wong SJ, Koski RA and Fikrig E (2001) Immunization of mice against West Nile Virus with recombinant envelope protein. J Immunol 167:5273-5277
Wengler G, Wengler G, Nowak T and Castle E (1990) Description of a procedure which allows isolation of viral non-structural proteins from BHK vertebrate cells infected with the West Nile flavivirus in a state which allows their direct chemical characterization. Virology 177:795-801
Yamshchikov VF, Wengler G, Perelygin AA, Brinton MA and Compans RW (2001) An infectious clone of the West Nile Flavivirus. Virology 281:294-304

## Claims

1. A method for producing an inactivated West Nile Virus comprising the steps of:
a) infecting a cell as deposited under ECACC no. 96022940, with a West Nile Virus;
b) culturing the cell obtained in step a) in a suitable medium under conditions that cause said virus to replicate in the cell;
c) optionally harvesting the produced West Nile Virus; and
d) inactivating the produced West Nile Virus.

2. A method according to claim 1, wherein said West Nile Virus is lineage II strain West Nile B956, lineage II strain Madagascar 1978, lineage II strain Cyprus 1968, lineage I strain Kunjin 1960, lineage I strain Kunjin 1991, lineage I strain Goose Israel 1998 or lineage I strain New York 1999.

3. A method according to claim 1, wherein said West Nile Virus is a lineage II strain selected from the group consisting of: Kenya, Uganda, Senegal 1990, Uganda 1937, Uganda 1959, Central African Republic 1972a, Central African Republic 1972b, Central African Republic 1983, Madagascar 1986 and Madagascar 1988.

4. A method according to any one of claims 1-3, wherein said West Nile Virus is applied in a multiplicity of infection ranging from 5 to 5x10⁻⁷ plaque forming units per cell.

5. A method according to any one of claims 1-4, wherein said inactivation step is performed before the step of harvesting said produced West Nile Virus.

6. A method according to any one of claims 1-5, wherein said produced West Nile Virus is inactivated by formaldehyde.

7. A method according to any one of claims 1-6, further comprising the steps of:
a) disrupting the produced West Nile Virus; and
b) purifying one or more antigenic components of said West Nile Virus, disrupted in the previous step.

8. A cell as deposited under ECACC no. 96022940, said cell comprising a nucleic acid coding for a West Nile Virus.

## Patentansprüche

1. Verfahren zum Herstellen eines inaktivierten West-Nil-Virus umfassend die Schritte:
a) Infizieren einer Zelle, die unter der ECACC-Nr. 96022940 hinterlegt ist, mit einem West-Nil-Virus;
b) Züchten der in Schritt a) erhaltenen Zelle in einem geeigneten Medium unter Bedingungen, die das Virus dazu veranlassen, in der Zelle zu replizieren;
c) gegebenenfalls Ernten des hergestellten West-Nil-Virus; und
d) Inaktivieren des hergestellten West-Nil-Virus.

2. Verfahren nach Anspruch 1, wobei das West-Nil-Virus der West-Nil-B956-Stamm der Abstammungslinie II, der Madagaskar-1978-Stamm der Abstammungslinie II, der Zypern-1968-Stamm der Abstammungslinie II, der Kunjin-1960-Stamm der Abstammungslinie I, der Kunjin-1991-Stamm der Abstammungslinie I, der Goose Israel-1998-Stamm der Abstammungslinie I oder der New York-1999-Stamm der Abstammungslinie I ist.

3. Verfahren nach Anspruch 1, wobei das West-Nil-Virus ein Stamm der Abstammungslinie II ist, ausgewählt aus der Gruppe bestehend aus: Kenia, Uganda, Senegal 1990, Uganda 1937, Uganda 1959, Zentralafrikanische Republik 1972a, Zentralafrikanische Republik 1972b, Zentralafrikanische Republik 1983, Madagaskar 1986 und Madagaskar 1988.

4. Verfahren nach einem der Ansprüche 1 bis 3, wobei das West-Nil-Virus in einer Multiplizität der Infektion von 5 bis 5x10⁻⁷ Plaque bildenden Einheiten pro Zelle angewendet wird.

5. Verfahren nach einem der Ansprüche 1 bis 4, wobei der Inaktivierungsschritt vor dem Schritt des Erntens des hergestellten West-Nil-Virus durchgeführt wird.

6. Verfahren nach einem der Ansprüche 1 bis 5, wobei das hergestellte West-Nil-Virus mit Formaldehyd inaktiviert wird.

7. Verfahren nach einem der Ansprüche 1 bis 6, ferner umfassend die Schritte:
a) Aufbrechen des erzeugten West-Nil-Virus; und
b) Reinigen einer oder mehrerer antigener Komponenten des West-Nil-Virus, das im vorangegangenen Schritt aufgebrochen wurde.

8. Zelle, die unter ECACC-Nr. 96022940 hinterlegt ist, wobei die Zelle eine Nucleinsäure umfasst, die ein West-Nil-Virus codiert.

## Revendications

1. Procédé de production d'un virus du Nil Occidental inactivé comprenant les étapes consistant à :
a) infecter une cellule déposée auprès de l'ECACC sous le n° 96022940, avec un virus du Nil Occidental ;
b) cultiver la cellule obtenue dans l'étape a) dans un milieu approprié dans des conditions provoquant la réplication dudit virus dans la cellule ;
c) facultativement prélever le virus du Nil Occidental produit ; et
d) inactiver le virus du Nil Occidental produit.

2. Procédé selon la revendication 1, dans lequel ledit virus du Nil Occidental est la souche de la lignée II B956 du virus du Nil Occidental, la souche de la lignée II Madagascar 1978, la souche de la lignée II Chypre 1968, la souche de la lignée I Kunjin 1960, la souche de la lignée I Kunjin 1991, la souche de la lignée I de l'oie d'Israël 1998 ou la souche de la lignée I New York 1999.

3. Procédé selon la revendication 1, dans lequel ledit le virus du Nil Occidental est une souche de la lignée II choisie dans le groupe constitué par : Kenya, Ouganda, Sénégal 1990, Ouganda 1937, Ouganda 1959, République centrafricaine 1972a, République centrafricaine 1972b, République centrafricaine 1983, Madagascar 1986 et Madagascar 1988.

4. Procédé selon l'une quelconque des revendications 1 à 3, dans lequel ledit virus du Nil Occidental est appliqué en une multiplicité d'infection allant de 5 à 5 x 10⁻⁷ unités formant des plages par cellule.

5. Procédé selon l'une quelconque des revendications 1 à 4, dans lequel ladite étape d'inactivation est réalisée avant l'étape de prélèvement dudit virus du Nil Occidental produit.

6. Procédé selon l'une quelconque des revendications 1 à 5, dans lequel ledit virus du Nil Occidental produit est inactivé par du formaldéhyde.

7. Procédé selon l'une quelconque des revendications 1 à 6, comprenant en outre les étapes consistant à :
a) dissocier le virus du Nil Occidental produit ; et
b) purifier un ou plusieurs composants antigènes dudit virus du Nil Occidental dissocié dans l'étape précédente.

8. Cellule déposée auprès de l'ECACC sous le n° 96022940, ladite cellule comprenant un acide nucléique codant pour un virus du Nil Occidental.


### SEQUENCE LISTING

<110> Crucell Holland B.V. UytdeHaag, Alphonsus GCM Goudsmit, Jaap Schouten, Govert J
<120> Vaccine against West Nile Virus
<130> 0082WO00ORD
<140> PCT/EP03/xxxxx
   <141> 2003-11-07
<150> PCT/NL02/00718
   <151> 2002-11-08
<150> PCT/EP03/50129
   <151> 2003-04-28
<160> 3
<170> PatentIn version 3.1
<210> 1
   <211> 21
   <212> DNA
   <213> Artificial
<220>
   <223> Synthetic oligonucleotide WNV 1
<400> 1
   ccaccggawg ttgagtagac g 21
<210> 2
   <211> 20
   <212> DNA
   <213> Artificial
<220>
   <223> Synthetic oligonucleotide WNV 2
<400> 2
   tttgktcacc cagtcctcct 20
<210> 3
   <211> 20
   <212> DNA
   <213> Artificial
<220>
   <223> Synthetic oligonucleotide VIC labelled probe
<220>
   <221> misc_feature
<222> (1) .. (1)
   <223> VIC label attached
<220>
   <221> misc_feature
   <222> (20) .. (20)
   <223> TAMRA label attached
<400> 3
   tgctgcctgc grctcaaccc 20